# EUROPEAN PATENT APPLICATION

(11) **EP 3 561 627 A1**
(43) Date of publication of application: **30.10.2019**
(21) Application number: 17881087.5
(22) Date of filing: 15.12.2017
(51) Int. Cl.: G05D 1/02

(54) **METHOD AND DEVICE FOR PARTITIONING WORKING AREA OF SELF-MOVING APPARATUS, AND ELECTRONIC DEVICE**

(30) Priority: 15.12.2016 CN 201611157425
(71) Applicant: Positec Power Tools (Suzhou) Co., Ltd, Suzhou, Jiangsu 215123 (CN)
(72) Inventor: ZHOU, Chang, Suzhou Jiangsu 215123 (CN); TAN, Yiyun, Suzhou Jiangsu 215123 (CN); LIU, Fangshi, Suzhou Jiangsu 215123 (CN); SHAO, Yong, Suzhou Jiangsu 215123 (CN)
(74) Representative: Dentons UK and Middle East LLP
(86) International application number: PCT/CN2017/116686
(87) International publication number: WO 2018/108180

(57) **Abstract**

The present invention relates to a dividing method for a working region of a self-moving device, including: detecting whether a working region includes a shaded region, the shaded region being a region in which a positioning signal received by a self-moving device does not satisfy a quality condition; determining a boundary condition of the working region; determining a contour condition of the shaded region; and dividing the working region into a plurality of sub-working regions based on the boundary condition of the working region and the contour condition of the shaded region, a part of the shaded region in any sub-working region being a sub-shaded region, the sub-shaded region having a length direction and a width direction, and the division enabling a length in the width direction to be less than a predetermined threshold.

## Description

### BACKGROUND

### Technical Field

The present invention relates to self-moving devices, and in particular, to a dividing method for a working region of a self-moving device, a dividing apparatus, and an electronic device.

### Related Art

An autonomous working system such as an autonomous lawn mower system can autonomously complete a lawn maintenance task or the like, and becomes increasingly popular among consumers. In the autonomous working system, a self-moving device such as an autonomous lawn mower is restricted to move inside a working region. When the autonomous lawn mower leaves the working region, a safety problem may occur. In addition, an obstacle may exist in the working region. The obstacle includes a pit, a flowering shrub, and the like. The autonomous lawn mower should avoid the obstacle in the working region during working to prevent accidents such as falling or trapping. To ensure the safety of the autonomous working system and improve the working efficiency of the autonomous lawn mower, the autonomous lawn mower needs to recognize the working region. The recognizing the working region includes recognizing a boundary of the working region and the obstacle in the working region.

In a method used by a conventional autonomous lawn mower to recognize a working region, a boundary line is arranged along a boundary of the working region, and a boundary line may be arranged along a periphery of an obstacle. A boundary line transmits an electrical signal to generate an electromagnetic field. A sensor on the autonomous lawn mower detects an electromagnetic field signal to determine whether the autonomous lawn mower is located inside or outside a region defined by a boundary line.

Such a method requires complex arrangement of a boundary line and adversely affects the look of a lawn.

To enable an autonomous lawn mower to recognize a working region without arranging a boundary line, a method for creating a map of a working region may be used. In the method for creating a map of a working region, position coordinates of a boundary, an obstacle, and the like of a working region are recorded, a coordinate system is established, and a map of the working region is generated. When an autonomous working system works, a position of the autonomous lawn mower on the map is observed to determine whether the autonomous lawn mower is inside a safe working region.

By using this method, a path may be preset, so that when an autonomous lawn mower is working, the autonomous lawn mower moves along the preset path. Another technical problem that follows is how to set more appropriately divided regions according to a feature of a working region, so that the autonomous lawn mower can safely and efficiently cover the working region.

With rapid development of autonomous technologies, various autonomous machines have been applied to an increasing number of fields and gradually become indispensable helpers in people's work.

As an autonomous self-moving device, autonomous lawn mowers have emerged to greatly reduce people's labor intensity and reduce working costs. However, because a lawn on which an autonomous lawn mower works usually has a relatively large area, a relatively small navigation positioning error may result in a relatively large deviation from an expected path. Therefore, how to reduce a walking deviation of an autonomous lawn mower to improve working precision is a problem that urgently needs to be resolved in autonomous lawn mower technologies.

Buildings and obstacles usually exist in a working region of an autonomous lawn mower. Shaded regions with weak navigation signals are easily formed around these buildings and obstacles. Satellite navigation signals usually tend to be blocked by the buildings, the obstacles, and the like and become weaker consequently. For example, an autonomous lawn mower may fail to be located precisely when working in a shaded region due to weak GPS signals.

### SUMMARY

To overcome the disadvantages in the prior art, a problem to be resolved by the present invention is to ensure that a self-moving device can safely and efficiently cover a working region.

The technical solution used by the present invention to resolve the problem in the prior art is as follows:
A dividing method for a working region of a self-moving device, comprising: detecting whether a working region comprises a shaded region, the shaded region being a region in which a positioning signal received by a self-moving device does not satisfy a quality condition; determining a boundary condition of the working region; determining a contour condition of the shaded region; and dividing the working region into a plurality of sub-working regions based on the boundary condition of the working region and the contour condition of the shaded region, a part of the shaded region in any sub-working region being a sub-shaded region, the sub-shaded region having a length direction and a width direction, and the division enabling a length in the width direction to be less than a predetermined threshold.

The dividing method for a working region of a self-moving device according to the above, wherein the predetermined threshold is 10 meters or 5 meters or 2 meters.

The dividing method for a working region of a self-moving device according to the above, further comprising: controlling the self-moving device to travel in the width direction in the sub-shaded region.

The dividing method for a working region of a self-moving device according to the above, wherein the controlling the self-moving device to travel in the width direction in the sub-shaded region comprises: controlling the self-moving device to enter the sub-shaded region from one side in the width direction; and controlling the self-moving device to keep traveling in the width direction to reach the other side of the sub-shaded region.

The dividing method for a working region of a self-moving device according to the above, wherein the controlling the self-moving device to travel in the width direction in the sub-shaded region further comprises: controlling the self-moving device to leave the sub-shaded region from the other side; or controlling the self-moving device to turn around at the other side to leave from the side, wherein a travel direction after the turnaround is the width direction.

The dividing method for a working region of a self-moving device according to the above, wherein the dividing the working region into a plurality of sub-working regions based on the boundary condition of the working region and the contour condition of the shaded region comprises: determining whether an area of the shaded region is greater than a predetermined area threshold; and dividing the working region into a plurality of sub-working regions in response to determining that the area of the shaded region is greater than the predetermined area threshold.

The dividing method for a working region of a self-moving device according to the above, wherein the dividing the working region into a plurality of sub-working regions based on the boundary condition of the working region and the contour condition of the shaded region comprises: dividing the working region into a plurality of sub-working regions based on the boundary condition of the working region and the contour condition of the shaded region, so that the self-moving device enters the shaded region in different directions in the plurality of sub-working regions.

The dividing method for a working region of a self-moving device according to the above, wherein that the self-moving device enters the shaded region in different directions in the plurality of sub-working regions comprises: determining whether a predetermined number of movements of the self-moving device in different directions cover the shaded region; and further dividing, in response to that the predetermined number of movements of the self-moving device in different directions do not cover the shaded region, the plurality of sub-working regions obtained after the division.

The dividing method for a working region of a self-moving device according to the above, wherein the dividing the working region into a plurality of sub-working regions based on the boundary condition of the working region and the contour condition of the shaded region comprises: dividing the plurality of sub-working regions so that adjacent working regions of the plurality of sub-working regions have an overlapping portion.

The dividing method for a working region of a self-moving device according to the above, wherein the dividing the working region into a plurality of sub-working regions based on the boundary condition of the working region and the contour condition of the shaded region further comprises: detecting a working area corresponding to a working time of a power supply of the self-moving device; determining whether an area of each of the plurality of sub-working regions is greater than the working area; and further dividing the sub-working region in response to determining that an area of one of the plurality of sub-working regions is greater than the working area, so that an area of the working region obtained after the division is less than the working area.

The dividing method for a working region of a self-moving device according to the above, further comprising: detecting whether an obstacle exists in the working region; determining whether a size of the obstacle is greater than a predetermined size threshold; and dividing the working region based on the obstacle in response to that the size of the obstacle is greater than the predetermined size threshold.

The dividing method for a working region of a self-moving device according to the above, further comprising: skipping division of the working region in response to that the size of the obstacle is less than the predetermined size threshold; and controlling the self-moving device to move around the obstacle or turn around at the obstacle to move on.

The dividing method for a working region of a self-moving device according to the above, wherein the determining whether a size of the obstacle is greater than a predetermined size threshold comprises: detecting that a state of the obstacle is moving or stationary; and detecting, in response to that the state of the obstacle is stationary, whether the size of the obstacle is greater than the predetermined size threshold.

The dividing method for a working region of a self-moving device according to the above, further comprising: skipping division of the working region in response to that the state of the obstacle is moving; and controlling the self-moving device to move around the obstacle or turn around at the obstacle to move on.

The dividing method for a working region of a self-moving device according to the above, further comprising: detecting whether a passage exists in the working region; and dividing, in response to that a passage exists in the working region, the working region into a first sub-working region on one side of the passage and a second sub-working region on the other side of the passage.

The dividing method for a working region of a self-moving device according to the above, further comprising: detecting a vegetation growth condition in the working region; and dividing the working region based on the vegetation growth condition.

The dividing method for a working region of a self-moving device according to the above, further comprising: in a process of controlling the self-moving device to move in the working region, obtaining map information of a path covered by the self-moving device; and updating a dividing strategy of the working region based on the map information.

The dividing method for a working region of a self-moving device according to the above, further comprising: determining whether an unworked region in which the self-moving device has not performed work exists in the working region; and dividing the working region to use the unworked region as a new sub-working region.

A dividing apparatus, configured to divide a working region of a self-moving device, and comprising: a shaded region detection unit, configured to detect whether a shaded region exists in the working region, the shaded region being a region in which a positioning signal received by the self-moving device does not satisfy a quality condition; a working region determining unit, configured to determine a boundary condition of the working region; a shaded contour determining unit, configured to determine a contour condition of the shaded region; and a dividing unit, configured to divide the working region into a plurality of sub-working regions based on the boundary condition of the working region and the contour condition of the shaded region, a part of the shaded region in any sub-working region being a sub-shaded region, the sub-shaded region having a length direction and a width direction, and the division enabling a length in the width direction to be less than a predetermined threshold.

The dividing apparatus according to the above, wherein the predetermined threshold is 10 meters or 5 meters or 2 meters.

The dividing apparatus according to the above, further comprising: a control unit, configured to control the self-moving device to travel in the width direction in the sub-shaded region.

The dividing apparatus according to the above, wherein the control unit is configured to: control the self-moving device to enter the sub-shaded region from one side in the width direction; and control the self-moving device to keep traveling in the width direction to reach the other side of the sub-shaded region.

The dividing apparatus for a working region of a self-moving device according to the above, wherein the control unit is further configured to: control the self-moving device to leave the sub-shaded region from the other side; or control the self-moving device to turn around at the other side to leave from the side, wherein a travel direction after the turnaround is the width direction.

The dividing apparatus according to the above, wherein the dividing unit is configured to: determine whether an area of the shaded region is greater than a predetermined area threshold; and divide the working region into the plurality of sub-working regions in response to determining that the area of the shaded region is greater than the predetermined area threshold.

The dividing apparatus according to the above, wherein the dividing unit is configured to: divide the working region into a plurality of sub-working regions based on the boundary condition of the working region and the contour condition of the shaded region; and control the self-moving device to enter the shaded region in different directions in the plurality of sub-working regions.

The dividing apparatus according to the above, wherein the dividing unit is configured to: determine whether a predetermined number of movements of the self-moving device in different directions cover the shaded region; and further divide, in response to that the predetermined number of movements of the self-moving device in different directions do not cover the shaded region, the plurality of sub-working regions obtained after the division.

The dividing apparatus according to the above, wherein the dividing unit is configured to: divide the plurality of sub-working regions so that adjacent working regions of the plurality of sub-working regions have an overlapping portion.

The dividing apparatus according to the above, further comprising: a working area detection unit, configured to detect a working area corresponding to a working time of a power supply of the self-moving device; and a working area determining unit, configured to determine whether an area of each of the plurality of sub-working regions is greater than the working area, wherein the dividing unit is configured to further divide the sub-working region in response to determining that an area of one of the plurality of sub-working regions is greater than the working area, so that an area of the working region obtained after the division is less than the working area.

The dividing apparatus according to the above, further comprising: an obstacle detection unit, configured to detect whether an obstacle exists in the working region; and an obstacle determining unit, configured to determine whether a size of the obstacle is greater than a predetermined size threshold, wherein the dividing unit is configured to divide the working region based on the obstacle in response to that the size of the obstacle is greater than the predetermined size threshold.

The dividing apparatus according to the above, wherein the dividing unit is configured to skip division of the working region in response to that the size of the obstacle is less than the predetermined size threshold; and the control unit is configured to control the self-moving device to move around the obstacle or turn around at the obstacle to move on.

The dividing apparatus according to the above, wherein the obstacle determining unit is configured to: detect that a state of the obstacle is moving or stationary; and detect, in response to that the state of the obstacle is stationary, whether the size of the obstacle is greater than the predetermined size threshold.

The dividing apparatus according to the above, wherein the dividing unit is configured to: skip division of the working region in response to that the state of the obstacle is moving; and control the self-moving device to move around the obstacle or turn around at the obstacle to move on.

The dividing apparatus according to the above, further comprising: a passage detection unit, configured to detect whether a passage exists in the working region, wherein the dividing unit is configured to divide, in response to that a passage exists in the working region, the working region into a first sub-working region on one side of the passage and a second sub-working region on the other side of the passage.

The dividing apparatus according to the above, further comprising: a vegetation detection unit, configured to detect a vegetation growth condition in the working region, wherein the dividing unit is configured to divide the working region based on the vegetation growth condition.

The dividing apparatus according to the above, further comprising: a map information obtaining unit, configured to: in a process of controlling the self-moving device to move in the working region, obtain map information of a path covered by the self-moving device, wherein a dividing strategy update unit, configured to update a dividing strategy of the working region based on the map information.

The dividing apparatus according to the above, further comprising: a blank region detection unit, configured to detect whether an unworked region in which the self-moving device has not performed work exists in the working region, wherein the dividing unit is configured to divide the working region to use the unworked region as a new sub-working region.

An autonomous working system, comprising: a self-moving device, moving and working within a working region defined on a map; and the dividing apparatus according to the above.

The autonomous working system according to the above, wherein the self-moving device is an autonomous lawn mower.

The autonomous working system according to the above, wherein the autonomous working system is an autonomous lawn mower.

A self-moving device, moving and working within a working region defined on a map, and comprising: the dividing apparatus according to the above.

An electronic device, comprising: a memory, configured to store computer executable instructions; and a processor, configured to execute the computer executable instructions stored in the memory, to perform the dividing method for a working region of a self-moving device according to the above.

A computer readable storage medium, storing computer program instructions, wherein when being executed by a computing apparatus, the computer program instructions are operable to perform the dividing method for a working region of a self-moving device according to the above.

Compared with the prior art, the beneficial effect of the present invention is as follows: A shaded region in a working region is detected and is divided based on a boundary condition of the working region and a contour condition of the shaded region, so that it can be ensured that a self-moving device safely and efficiently covers the working region.

In view of this, the following technical solution may be used in the present invention: A moving method of a self-moving device is provided, including: presetting a preset movement path of a self-moving device; enabling the self-moving device to move along the preset movement path; and checking whether a moving direction of the self-moving device deviates from the preset movement path, and when the moving direction of the self-moving device deviates from the preset movement path, calibrating the moving direction of the self-moving device, to enable the self-moving device to move along the preset movement path, the preset movement path including several first path segments, the first path segment being divided into several sub-path segments, and an end point of the sub-path segment being referred to as a node; and the calibrating the moving direction of the self-moving device includes: calibrating the moving direction of the self-moving device by using the node as a target point.

Further, the self-moving device has a consistent moving direction along the first path segment.

Further, the first path segment includes a straight line segment.

Further, the first path segment includes a polygonal line segment, and the node includes a turning point of the polygonal line segment.

Further, the checking whether a moving direction of the self-moving device deviates from the preset movement path includes: providing an angle sensor, outputting an angle parameter of a movement of the self-moving device, and determining, according to the angle parameter, whether a current moving direction of the self-moving device is consistent with a preset moving direction, so as to determine whether the moving direction of the self-moving device deviates from the preset movement path.

Further, the angle sensor includes a gyroscope.

Further, the checking whether a moving direction of the self-moving device deviates from the preset movement path includes: providing a positioning device, outputting a current position of the self-moving device, calculating a deviation angle of the self-moving device according to a direction from the current position of the self-moving device to a target position and a direction of the preset movement path, and determining, according to whether the deviation angle is greater than a preset threshold, whether the moving direction of the self-moving device deviates from the preset movement path.

Further, the deviation angle of the self-moving device is calculated at an interval of a preset time, and it is determined, according to whether the deviation angle is greater than a preset threshold, whether the moving direction of the self-moving device deviates from the preset movement path.

Further, the preset movement path includes a second path segment, and the self-moving device steers along the second path segment.

Further, several nodes are set in the second path segment, and the self-moving device moves along the second path segment by sequentially using the several nodes in the second path segment as the target point.

Further, the second path segment includes an arc segment.

Further, the second path segment includes an irregular path segment.

Further, the second path segment connects a movement path of the self-moving device before steering and a movement path of the self-moving device after steering, and the irregular path segment includes extended segments extending relative to outer sides of the movement path before steering and the movement path after steering.

Further, the self-moving device moves along the second path segment at an edge position of a working region, and when moving along the extended segment of the second path segment, the self-moving device at least partially covers an edge region that is not covered when the self-moving device moves along an adjacent second path segment.

Further, the preset movement path includes parallel reciprocating paths, and the second path segment connects parallel paths among the parallel reciprocating paths.

Further, the first path segment being divided into several sub-path segments includes: presetting the node.

Further, the first path segment being divided into several sub-path segments includes: setting and/or updating the node as the self-moving device moves along the preset movement path.

Further, when the self-moving device arrives at the node, a next node in the moving direction is used as the target point to determine the moving direction of the self-moving device.

The following technical solution may further be used in the present invention: A self-moving device is provided, autonomously moving inside a working region based on a map, and including a preset module and a control module, where the preset module is configured to preset a preset movement path of the self-moving device; and the control module is configured to: enable the self-moving device to move along the preset movement path; and check whether a moving direction of the self-moving device deviates from the preset movement path, and when the moving direction of the self-moving device deviates from the preset movement path, calibrate the moving direction of the self-moving device, to enable the self-moving device to move along the preset movement path, the preset movement path including several first path segments, the first path segment being divided into several sub-path segments, and an end point of the sub-path segment being referred to as a node; and the calibrating the moving direction of the self-moving device includes: calibrating the moving direction of the self-moving device by using the node as a target point.

Further, the control module includes an angle sensor, outputting an angle parameter of a movement of the self-moving device, and the control module determines, according to the angle parameter, whether a current moving direction of the self-moving device is consistent with a preset moving direction, so as to determine whether the moving direction of the self-moving device deviates from the preset movement path.

Further, the angle sensor includes a gyroscope.

Further, the control module includes a calculation unit and a determining unit, where the calculation unit is configured to calculate a deviation angle of the self-moving device according to a direction from a current position of the self-moving device to a target position and a direction of the preset movement path, and the determining unit is configured to determine, according to whether the deviation angle is greater than the preset threshold, whether the moving direction of the self-moving device deviates from the preset movement path.

Further, the calculation unit is configured to calculate the deviation angle of the self-moving device at an interval of a preset time, and the determining unit is configured to determine, according to whether the deviation angle is greater than the preset threshold, whether the moving direction of the self-moving device deviates from the preset movement path.

Further, the preset module is further configured to preset the node.

Further, the control module further includes an update unit, configured to set and/or update the node as the self-moving device moves along the preset movement path.

Further, when the self-moving device arrives at the node, the control module uses a next node in the moving direction is used as the target point to determine the moving direction of the self-moving device.

The following technical solution may further be used in the present invention: a storage medium, storing computer readable instructions, where when the computer readable instructions are invoked, the foregoing method is performed.

The following technical solution may further be used in the present invention: a server, including a memory and a processor, where the memory stores computer readable instructions, and the processor invokes the computer readable instructions and performs the foregoing method.

The present invention provides a walking method of a self-moving device, a self-moving device, a memory, and a server. In the walking method provided in the present invention, a first path segment of a preset path segment is divided into several sub-path segments, an end point of each sub-path segment is used as a node, and each node is used as a target point, so as to calibrate a moving direction of a self-moving device in each sub-path segment, thereby significantly improving working precision of the self-moving device.

Embodiments of the present invention provide a working method of a self-moving device, a self-moving device, a memory, and a server. In the working method of a self-moving device, a direction in which a self-moving device enters a shaded region may be selected, so that duration during which the self-moving device remains in the shaded region can be shortened, thereby improving positioning precision of the self-moving device.

An aspect of the present invention provides a working method of a self-moving device. The method includes: detecting a shaded region in a working region; recognizing information about a geometric feature of the shaded region; determining, according to the geometric feature, an entry direction in which a self-moving device enters the shaded region; and enabling the self-moving device to enter the shaded region in the entry direction.

In an embodiment, the entry direction is a direction approximately perpendicular to a longitudinal axis of the shaded region.

In an embodiment, the shaded region includes a first edge located on a side of the longitudinal axis of the shaded region, and the entry direction is an approximately normal direction of the first edge.

In an embodiment, the shaded region includes a first edge and a second edge that are respectively located on two sides of the longitudinal axis of the shaded region, and the entry direction is a direction in which a distance between the first edge and the second edge is the shortest.

In an embodiment, the shaded region includes a first edge near an obstacle and a second edge far away from the obstacle, and the entry direction includes an approximately normal direction in the first edge or the second edge, or the entry direction is a direction in which a distance between the first edge and the second edge is the shortest.

In an embodiment, the working method of a self-moving device includes: obtaining a first positioning signal output by a first positioning device, where the shaded region is a region in which the first positioning signal output by the first positioning device does not satisfy a quality requirement.

In an embodiment, the first positioning device includes a satellite positioning device.

In an embodiment, the working method of a self-moving device further includes: presetting a quality threshold of the first positioning signal; and obtaining a quality parameter of the first positioning signal from the first positioning device, and determining, according to that the obtained quality parameter of the first positioning signal does not satisfy the threshold, that the self-moving device is located in the shaded region.

In an embodiment, the working method of a self-moving device further includes: presetting a quality threshold of the first positioning signal; loading a map of the working region; marking an initial shaded region on the map; obtaining a quality parameter of the first positioning signal from the first positioning device; and updating the initial shaded region according to a relationship between the obtained quality parameter of the first positioning signal and the threshold.

In an embodiment, the working method further includes: obtaining a second positioning signal output by a second positioning device; presetting a quality threshold of the first positioning signal; and obtaining a quality parameter of the first positioning signal from the first positioning device; and the enabling the self-moving device to enter the shaded region in the entry direction includes: when the quality parameter of the first positioning signal does not satisfy the threshold, enabling the second positioning signal; and when the quality parameter of the first positioning signal satisfies the threshold, reusing the first positioning signal to locate the self-moving device.

In an embodiment, the working method further includes: obtaining a second positioning signal output by a second positioning device, enabling both the first positioning signal and the second positioning signal, and locating the self-moving device by using a weighted value of the first positioning signal and the second positioning signal; presetting a quality threshold of the first positioning signal; obtaining a quality parameter of the first positioning signal from the first positioning device; and the enabling the self-moving device to enter the shaded region in the entry direction includes: increasing a weight of the second positioning signal when the quality parameter of the first positioning signal does not satisfy the threshold; and decreasing a weight of the second positioning signal when the quality parameter of the first positioning signal satisfies the threshold.

In an embodiment, the second positioning device includes an inertial navigation device.

In an embodiment, when the quality parameter of the first positioning signal satisfies the threshold, the second positioning signal is corrected by using the first positioning signal.

In an embodiment, after the enabling the self-moving device to enter the shaded region in the entry direction, the method further includes: enabling the self-moving device to exit the shaded region in an exit direction opposite to the entry direction.

Another aspect of the present invention provides a self-moving device, including a detection module and a control module, where the detection module is configured to obtain a shaded region in a working region; and the control module is configured to: recognize a geometric feature of the shaded region; determine, according to the geometric feature, an entry direction in which the self-moving device enters the shaded region; and enable the self-moving device to enter the shaded region in the entry direction.

In an embodiment, the entry direction is a direction approximately perpendicular to a longitudinal axis of the shaded region.

In an embodiment, the shaded region includes a first edge located on a side of the longitudinal axis of the shaded region, and the entry direction is an approximately normal direction of the first edge.

In an embodiment, the shaded region includes a first edge and a second edge that are respectively located on two sides of the longitudinal axis of the shaded region, and the entry direction is a direction in which a distance between the first edge and the second edge is the shortest.

In an embodiment, the shaded region includes a first edge near an obstacle and a second edge far away from the obstacle, and the entry direction includes an approximately normal direction in the first edge or the second edge, or the entry direction is a direction in which a distance between the first edge and the second edge is the shortest.

In an embodiment, the self-moving device is located by using a first positioning signal output by the first positioning device, and the shaded region is a region in which the first positioning signal output by the first positioning device does not satisfy a quality requirement.

In an embodiment, the detection module further includes a loading unit, a marking unit, and an update unit, where the loading unit is configured to load a map of the working region; the marking unit is configured to mark an initial shaded region on the map; and the update unit updates the initial shaded region according to that a quality parameter of the first positioning signal does not satisfy the quality requirement.

In an embodiment, the detection module further includes a preset unit and an obtaining unit, where the preset unit is configured to preset a quality threshold of the first positioning signal provided by the first positioning device; and the obtaining unit obtains a quality parameter of the first positioning signal from the first positioning device, and determines, according to that the obtained quality parameter of the first positioning signal does not satisfy the threshold, that the self-moving device is located in the shaded region.

In an embodiment, the first positioning device is a satellite navigation device.

In an embodiment, the control module further includes a switching unit; the self-moving device further uses a second positioning signal output by a second positioning device to assist in positioning the self-moving device; the obtaining unit obtains a quality parameter of the first positioning signal from the first positioning device; when the quality parameter of the first positioning signal does not satisfy the threshold, the switching unit enables the second positioning signal; and when the quality parameter of the first positioning signal satisfies the threshold, the first positioning signal is reused to locate the self-moving device.

In an embodiment, the control module further includes a control unit and a calculation unit, where the self-moving device further uses a second positioning signal output by a second positioning device to assist positioning of the self-moving device; the control unit enables both the first positioning signal and the second positioning signal, and locates the self-moving device by using a weighted value of the first positioning signal and the second positioning signal; the obtaining unit obtains a quality parameter of the first positioning signal from the first positioning device; the calculation unit increases a weight of the second positioning signal when the quality parameter of the first positioning signal does not satisfy the threshold; and the calculation unit decreases a weight of the second positioning signal when the quality parameter of the first positioning signal satisfies the threshold.

In an embodiment, when the quality parameter of the first positioning signal satisfies the threshold, the second positioning signal is corrected by using the first positioning signal.

In an embodiment, the second positioning device includes an inertial navigation device.

In an embodiment, after enabling the self-moving device to enter the shaded region in the entry direction, the control module enables the self-moving device to exit the shaded region in an exit direction opposite to the entry direction.

Still another aspect of the present invention provides a memory, storing computer readable instructions, where when the computer readable instructions are invoked, the foregoing method is performed.

Yet another aspect of the present invention provides a server, including a processor and a memory, where the memory stores computer readable instructions, and the processor is configured to invoke the computer readable instructions and perform the foregoing method.

Embodiments of the present invention provide a working method of a self-moving device, a self-moving device, a memory, and a server. A direction in which a self-moving device enters a shaded region is selected, so that duration during which the self-moving device remains in the shaded region can be shortened, thereby improving positioning precision of the self-moving device.

### BRIEF DESCRIPTION OF THE DRAWINGS

The foregoing objectives, technical solutions, and beneficial effects of the present invention may be implemented by using the accompanying drawings below:
FIG. 1 is a schematic diagram of an autonomous working system according to a first embodiment of the present invention;
FIG. 2 is a schematic structural diagram of an autonomous lawn mower according to the first embodiment of the present invention;
FIG. 3(a) and FIG. 3(b) are schematic composition diagrams of a navigation module according to the first embodiment of the present invention;
FIG. 4 is a working principle diagram of a navigation module according to the first embodiment of the present invention;
FIG. 5(a) to FIG. 5(c) are principle diagrams of position correction by a base station according to the first embodiment of the present invention;
FIG. 6 is a flowchart of position correction by a base station according to the first embodiment of the present invention;
FIG. 7 to FIG. 10 are schematic diagrams of a movement path of an autonomous lawn mower according to the first embodiment of the present invention;

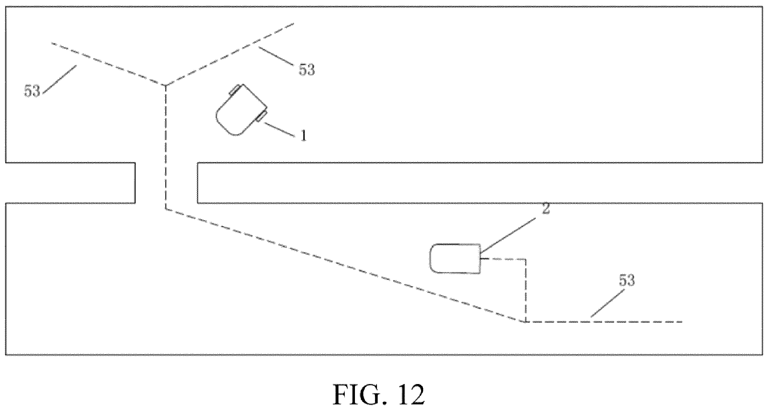

FIG. 11 to FIG. 13 are schematic diagrams of a return path of an autonomous lawn mower according to the first embodiment of the present invention;
FIG. 14 is a schematic flowchart of a dividing method for a working region of a self-moving device according to an embodiment of the present invention;
FIG. 15(a) to FIG. 15(c) are schematic diagrams of performing division based on a shaded region according to an embodiment of the present invention;
FIG. 16 is a schematic block diagram of a dividing apparatus according to an embodiment of the present invention;
FIG. 17 is a schematic block diagram of an electronic device according to an embodiment of the present invention;
FIG. 18 is a flowchart of a moving method of a self-moving device according to the present invention;
FIG. 19 is a schematic diagram of a preset path of a self-moving device according to the present invention;
FIG. 20a is a schematic diagram of a first path segment being an inclined straight line according to the present invention;
FIG. 20b is a schematic diagram of a first path segment being a polygonal line segment according to the present invention;
FIG. 20c is a schematic diagram of a self-moving device using a second method to check whether a moving direction of the self-moving device deviates from a preset movement path according to the present invention;
FIG. 21a is a schematic diagram of a second path segment being an arc segment according to the present invention;
FIG. 21b is a schematic diagram of a second path segment being an irregular path segment according to the present invention;
FIG. 21c is a schematic diagram of a self-moving device steering by using a U-shaped path;
FIG. 22 is a diagram showing modules of a self-moving device according to an embodiment of the present invention;
FIG. 23 is a schematic modular diagram of a control module of a self-moving device according to the present invention;
FIG. 24 is a flowchart of a working method of a self-moving device according to an embodiment of the present invention;
FIG. 25a to FIG. 25e are schematic working diagrams of a self-moving device according to an embodiment of the present invention;
FIG. 26a is a schematic diagram of modules of a self-moving device according to an embodiment of the present invention;
FIG. 26b is a schematic diagram of a control module according to an embodiment of the present invention;
FIG. 27 is a schematic diagram of a detection module according to an embodiment of the present invention; and
FIG. 28 is a schematic diagram of a control module according to an embodiment of the present invention.

### DETAILED DESCRIPTION

Exemplary embodiments according to the present application are described below in detail with reference to the accompanying drawings. Apparently, the described embodiments are merely some embodiments of the present application rather than all the embodiments of the present application. It should be understood that the present application is not limited to the exemplary embodiments described herein.

### Brief description of an autonomous working system

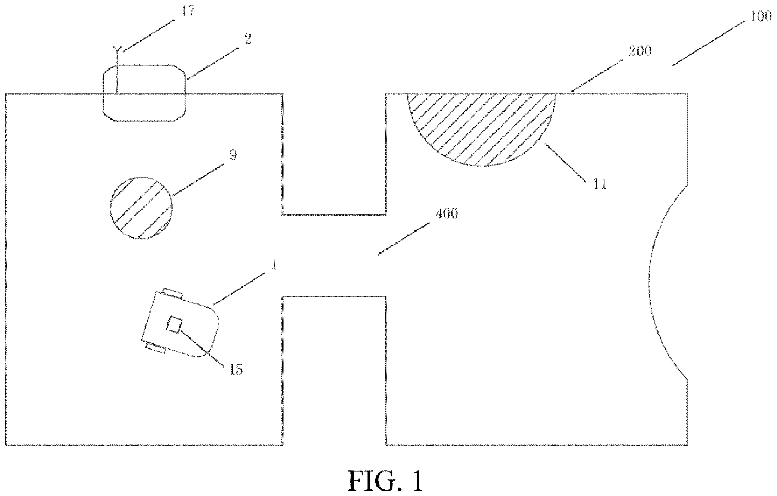

FIG. 1 is a schematic diagram of an autonomous working system 100 according to a first embodiment of the present invention. The autonomous working system includes a self-moving device. In this embodiment, the self-moving device is an autonomous lawn mower 1. In another embodiment, the self-moving device may be alternatively an unattended device such as an autonomous cleaning device, an autonomous irrigation device, an autonomous snowplow, and the like. The autonomous working system 100 further includes a charging station 2 configured to charge the autonomous lawn mower 1. In this embodiment, the autonomous working system 100 includes a navigation module configured to output a current position of the autonomous lawn mower. Specifically, the navigation module includes a base station 17 and a mobile station 15.

As shown in FIG. 1, the autonomous working system is configured to work within a predetermined working region. In this embodiment, the working region includes at least two separate sub-working regions. The sub-working regions are in communication through a passage 400. A boundary 200 is formed between the working region and a non-working region. Obstacles 9, 11 exist in the working region. The obstacle is a tree, a pit or the like.

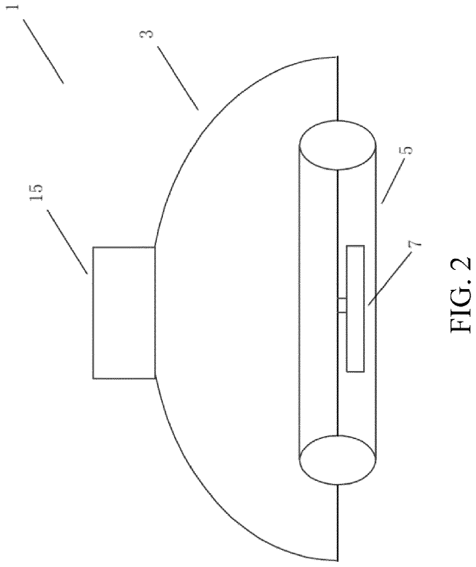

The structure of the autonomous lawn mower 1 in this embodiment is shown in FIG. 2. The autonomous lawn mower 1 includes a housing 3, a movement module, a task execution module, an energy source module, a control module, and the like. The movement module includes a continuous track 5 driven by a drive motor to enable the autonomous lawn mower 1 to move. The task execution module includes a cutting assembly 7 performing grass cutting work. The energy source module includes a battery pack (not shown) supplying electrical energy to the autonomous lawn mower 1 to move and work. The control module is electrically connected to the movement module, the task execution module, and the energy source module, controls the movement module to enable the autonomous lawn mower 1 to move, and controls the task execution module to perform a task.

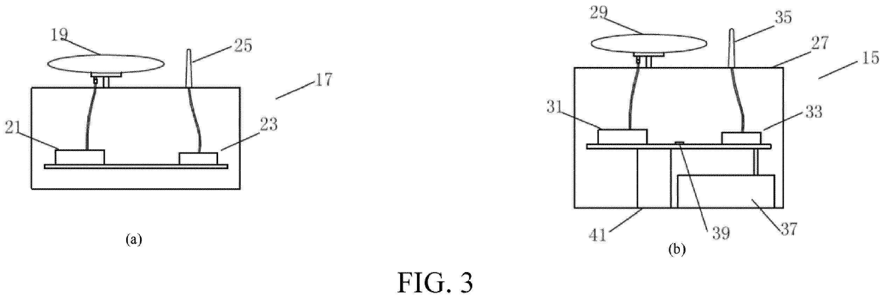

The composition of the navigation module in this embodiment is shown in FIG. 3(a) and FIG. 3(b). The navigation module includes the base station 17 and the mobile station 15. The base station 17 and the mobile station 15 both receive satellite signals, and the base station 17 sends a positioning correction signal to the mobile station 15, to implement differential satellite positioning. In this embodiment, the base station 17 and the mobile station 15 receive GPS positioning signals to implement differential GPS (DGPS) positioning. Certainly, in another embodiment, the base station 17 and the mobile station 15 may alternatively receive positioning signals of the Galileo satellite navigation system, the Beidou satellite navigation system, the global navigation satellite system (GLONASS) or the like.

As shown in FIG. 3(a), in this embodiment, the base station 17 includes: a GPS antenna 19, receiving a GPS positioning signal; a GPS card 21, processing the received GPS positioning signal, and generating the positioning correction signal; and a communications module 23, sending the positioning correction signal to the mobile station 15. In this embodiment, the communications module 23 includes a radio station and a radio station antenna 25. The base station further includes an indicator (not shown). The indicator can output an indication showing whether a satellite signal at a current position is desirable. In this embodiment, the base station 17 is disposed at the charging station 2 and is integrated with the charging station 2. In another embodiment, the base station 17 may be alternatively disposed separately from the charging station 2, for example, may be disposed at a position such as a roof where a satellite signal can be better received.

In this embodiment, the mobile station 15 includes: a housing 27; a GPS antenna 29, receiving a GPS positioning signal; a GPS card 31, processing the received GPS positioning signal; and a communications module 33, receiving the positioning correction signal sent by the base station 17. The communications module 33 includes a radio station and a radio station antenna 35. In this embodiment, the mobile station 15 integrates an inertial navigation system (not shown). The inertial navigation system outputs inertial navigation data. When the mobile station 15 is working, only a GPS positioning signal may be used for navigation, or a positioning signal obtained by combining a GPS positioning signal and inertial navigation data may be used for navigation, or only inertial navigation data may be used for navigation if a GPS signal is weak. The mobile station 15 further includes an indicator (not shown) outputting an indication showing whether a DGPS signal at a current position is desirable. In this embodiment, the mobile station 15 is detachably connected to the housing 3 of the autonomous lawn mower 1. The mobile station 15 includes a first interface (not shown) for connecting to the housing of the autonomous lawn mower 1. When the autonomous lawn mower 1 is working, the mobile station 15 is installed at the housing 3 of the autonomous lawn mower 1. When being connected to the housing 3 of the autonomous lawn mower 1, the mobile station 15 may be electrically connected to the control module of the autonomous lawn mower 1, the mobile station 15 outputs coordinates of the current position of the autonomous lawn mower 1. The control module controls, according to the current position of the autonomous lawn mower 1, the autonomous lawn mower 1 to move and work. In this embodiment, the mobile station 15 includes an independent power supply module 37. The mobile station 15 may work independently when being separated from the housing 3 of the autonomous lawn mower 1.

In this embodiment, before the autonomous lawn mower starts to work, a map of the working region needs to be created. Specifically, in this embodiment, the navigation module of the autonomous working system is used to create the map of the working region. The creating the map of the working region includes a step of recording the map.

The step of recording the map is started after a user finishes installing the base station. In the first embodiment of the present invention, to record the map, the mobile station is separated from the housing of the autonomous lawn mower, the mobile station works independently, and the user holds the mobile station and walks to record the map. The recording the map includes the following steps: Starting from a starting point, that is, a position of the charging station in this embodiment, the user starts to walk along a boundary of the working region to record position coordinates of the boundary; the user walks along an obstacle in the working region to record position coordinates of the obstacle; the user walks along a traffic island in the working region to record position coordinates of the traffic island; and the user walks along a passage connecting sub-working regions to record position coordinates of the passage. In this embodiment, when the user holds the mobile station to record the map, the inertial navigation system is in an off state. The reason is that when the user holds the mobile station and moves, with the shaking of a hand, the mobile station may tilt around, causing severe interference with the inertial navigation system.

In a second embodiment of the present invention, to record the map, the mobile station is installed at the housing of the autonomous lawn mower, and the user uses an intelligent terminal device such as a mobile phone and a tablet to remotely control the autonomous lawn mower to move. Similarly, the step of recording the map includes recording the boundary of the working region, an obstacle in the working region, a passage connecting sub-regions or the like. In this embodiment, in the process of recording the map, an inertial navigation apparatus may be turned on. The reason is that the mobile station is installed at the housing of the autonomous lawn mower, and the mobile station moves relatively stably. In this embodiment, in the process of recording the map, the task execution module of the autonomous lawn mower is kept off.

In a third embodiment of the present invention, the autonomous lawn mower includes a pushing rod, detachably installed at the housing of the autonomous lawn mower. To record the map, the mobile station is installed at the housing of the autonomous lawn mower, the pushing rod is installed at the housing of the autonomous lawn mower, and the user operates the pushing rod to push the autonomous lawn mower to move, to record the boundary of the working region, an obstacle, a passage or the like. Similarly, the task execution module of the autonomous lawn mower is kept off.

In a fourth embodiment of the present invention, the autonomous lawn mower includes an ultrasonic apparatus, so that the autonomous lawn mower can follow the user at a distance. To record the map, the mobile station is installed at the housing of the autonomous lawn mower, the user walks along the boundary of the working region, an obstacle, a passage or the like, and the autonomous lawn mower follows the user, to record the map. Similarly, the task execution module of the autonomous lawn mower is kept off. The benefit of this approach is that the autonomous lawn mower follows the user when recording the map, so that it can be determined whether a position recorded on the map is accurate, and the map is examined.

In a fifth embodiment of the present invention, to record the map, the mobile station is separated from the autonomous lawn mower, and the mobile station is placed on a pushable cart. For example, the mobile station may be installed on a hand-propelled device, and the user pushes a cart and walks, to record the boundary of the working region, an obstacle, a passage or the like. The benefit of this approach is that the mobile station moves stably, and an inertial navigation apparatus may be turned on.

In the first embodiment of the present invention, the mobile station includes a second interface for connecting to the intelligent terminal of the user. The intelligent terminal such as a mobile phone and a tablet may be installed on the mobile station through the second interface. The second interface may include an electrical interface, so that when being installed on the mobile station, the intelligent terminal is electrically connected to the mobile station. In this embodiment, the mobile station communicates with the intelligent terminal wirelessly by using the communications module. The wireless communication manner may be Wi-Fi, a cellular network, Bluetooth or the like. To record the map, the intelligent terminal is installed on the mobile station and displays in real time information recorded by the mobile station. In this embodiment, the mobile station includes several buttons configured to input instructions such as "record a map" and "complete recording". In another embodiment, the mobile station includes a display screen displaying information in real time in place of the intelligent terminal.

In this embodiment, the charging station is used as a starting point on the map, and the autonomous lawn mower starts to work from the charging station. To record the position of the charging station, the mobile station is installed on the autonomous lawn mower, so that the autonomous lawn mower is in a charging state, or the charging state of the autonomous lawn mower is simulated, that is, a docking state is completed, recording of the position information of the charging station is confirmed manually or by using a charging signal. The position information of the charging station includes position coordinates, and further includes attitude information of the autonomous lawn mower. The autonomous lawn mower includes an acceleration sensor, an electronic compass, and the like. To record the position of the charging station, the acceleration sensor, the electronic compass, and the like are used to record current information such as a direction and a tilt angle of the autonomous lawn mower, to facilitate accurate docking when the autonomous lawn mower returns.

In the first embodiment of the present invention, the mobile station includes a map generation module configured to generate the map of the working region according to recorded position coordinates and save the map. In this embodiment, every time the user walks to form a closed region, the user uses a button to input a map generation instruction to generate map information of the closed region. For example, when recording the boundary of the working region, the user walks along a boundary of a sub-working region. After the boundary of the sub-working region is completed, the boundary of the sub-working region is generated, and then a boundary of a next sub-working region starts to be recorded. Similarly, when recording an obstacle and a passage, the user walks along the obstacle or passage to form a closed region, the map information corresponding to the closed region is generated, and the user then records a next closed region. On the generated map, an attribute is assigned to the recorded closed region. For example, if a boundary attribute is assigned to the recorded closed region, the autonomous lawn mower can work within the region but cannot leave the region. If an obstacle attribute is assigned to the recorded closed region, the autonomous lawn mower cannot enter the region. In addition, the obstacle needs to be located inside the boundary. Therefore, a part, outside the boundary, of the obstacle will be discarded. If a passage attribute is assigned to the recorded closed region, the autonomous lawn mower can enter the region but cannot perform grass cutting work within the region. A passage may be located inside or outside the boundary. If a passage is located outside the boundary, the passage is used to connect two separate sub-working regions. Therefore, the passage needs to intersect with both the sub-working regions. If a passage is located inside the boundary, the passage is usually a non-lawn surface. Therefore, the autonomous lawn mower is also forbidden to perform grass cutting work.

In this embodiment, a Cartesian coordinate system is established to generate the map. Specifically, the first point from which recording is started is used as the origin (0, 0) of the coordinate axes. The position coordinates that correspond to the origin and are output by the mobile station are (x0, y0). In this embodiment, the origin (0, 0) of the coordinate axes corresponds to the position coordinates of the charging station. As the user records the map, the mobile station outputs position coordinates (x1, y1), and converts the position coordinates (x1, y1) into (x1 - x0, y1 - y0) when generating the map, so as to convert a satellite positioning coordinate system into the Cartesian coordinate system. In this embodiment, a raster image is generated based on the Cartesian coordinate system. Rasterization precision, for example, 1 mm, is defined. In the Cartesian coordinate system, straight lines are drawn at an interval of 1 mm separately on X and Y axes, so as to form the raster image. The recorded position coordinates are converted into a grid on the Cartesian coordinate system. In this way, the map recording process is equivalent to a process of placing points on the raster image. As the points are placed, each point further records some other information, for example, a DGPS signal condition at the point, the altitude of the point, and a positioning error of the point. A boundary, an obstacle, and a passage are all generated in a similar way.

After the raster image is generated, a cell attribute is assigned to a raster cell. The cell attribute includes coordinates, whether the autonomous lawn mower can cover the raster cell, whether the autonomous lawn mower passes through the raster cell, a quantity of times that the autonomous lawn mower passes through the raster cell, a DGPS signal condition, a positioning error, altitude, a slope, temperature, humidity, sunlight intensity, and the like. If the cell attribute of a raster cell indicates that the autonomous lawn mower cannot cover the raster cell, when the autonomous lawn mower approaches a position corresponding to the raster cell, the control module controls the autonomous lawn mower to change a movement manner to stay away from the position corresponding to the raster cell. If the cell attribute of a raster cell indicates that the autonomous lawn mower can cover the raster cell, every time the autonomous lawn mower passes through the raster cell, the cell attribute being the quantity of times that the autonomous lawn mower passes through the raster cell of the raster cell is increased by 1.

In this embodiment, an offset operation is performed on the map to eliminate a positioning error. When the autonomous lawn mower is working, the mobile station is installed at the housing of the autonomous lawn mower to output coordinates of the current position of the autonomous lawn mower. The positioning center of the autonomous lawn mower deviates from the positioning center of the mobile station during map recording. A safety problem may occur if the deviation is not calibrated. For example, when the autonomous lawn mower moves towards the boundary but the positioning center of the autonomous lawn mower is still within the boundary, the autonomous lawn mower continues to move, and as a result the autonomous lawn mower moves outside the boundary. To eliminate a positioning error caused by the deviation of the positioning center of the autonomous lawn mower from the positioning center of the mobile station during map recording, an offset operation is performed on the map. A distance D of the deviation of the positioning center of the autonomous lawn mower from the positioning center of the mobile station during map recording is determined, the boundary, an obstacle, a passage, and the like are offset on the map into the working region by the distance D. To be specific, the boundary and the passage are shrunk by the distance D, and the obstacle is enlarged by the distance D. An operation of shrinking the boundary and a passage is also referred to as a map erosion, and an operation of enlarging the obstacle is also referred to as a map expansion.

A positioning error also exists during map recording. The severity of the positioning error is related to a DGPS signal condition, that is, is related to a precision level of a coordinate point. When the GPS signal is strong, the positioning error is relatively small, and when the GPS signal is weak, the positioning error is relatively large. When an offset operation is performed on the map to eliminate a positioning error, first, a positioning error of the position is evaluated according to DGPS signal conditions at different positions. This is also referred to as error evaluation. Deviations on the map are then adjusted according to error evaluations of different positions. An offset operation similarly includes an erosion and an expansion.

In this embodiment, after the map of the working region is offset, the map of the region may be joined with the maps of other regions.

After the offset operation is completed, the step of generating the map of the working region is completed.

In this embodiment, the mobile station further includes an auxiliary positioning apparatus. The auxiliary positioning apparatus includes a pedometer, a laser radar, a camera, an odometer, an ultrasonic wave, and the like. The inertial navigation system may also be considered as an auxiliary positioning apparatus. The auxiliary positioning apparatus is configured to assist in DGPS positioning when a DGPS signal is weak, and a correction value output by the auxiliary positioning apparatus is used to correct a positioning error, so that the generated map is more precise.

In a sixth embodiment of the present invention, the working region has a boundary with a regular shape, for example, a rectangular boundary. To record the map, the user only needs to record the positions of the vertices of the working region. During map generation, the vertices are connected to obtain the boundary. Such a method is also applicable to a passage, an obstacle, and the like with a regular shape. In the method, map generation efficiency can be improved, and a possible region with a poor DGPS signal in the middle is avoided.

In the first embodiment of the present invention, DGPS positioning is implemented by using communication between the base station and the mobile station. The base station is disposed in several manners to enable the base station and the mobile station to reliably and efficiently provide navigation data to the autonomous working system. In this embodiment, the base station is disposed at the charging station and is powered by the charging station. Certainly, in another embodiment, the base station may be disposed separately from the charging station. The base station may be powered by independent energy sources. For example, a power form such as solar energy and wind energy may be used. In this embodiment, to ensure a strong satellite signal at the base station, before the charging station is installed, the user first places the autonomous lawn mower at a position where the user intends to install the charging station. Alternatively, the user detaches the mobile station from the autonomous lawn mower and then moves the mobile station to the position where the user intends to install the charging station. The user turns on positioning, determines positioning precision, and confirms that the positioning precision is high before fixing the charging station. The base station is provided with an acoustic, optical, electrical apparatus or the like configured to feed back a condition of a satellite signal to indicate whether an installing position or receiving quality of the base station is appropriate. The base station can perform comparison by using historical coordinates to determine whether there is an exception such as blockage. If positioning precision is reduced, it indicates that the base station may be blocked. After discovering an exception, the base station sends prompt information to the user or the autonomous lawn mower by using a communications module, or switches a state to wait for recovery.

To enable the base station and the mobile station to reliably and efficiently provide navigation data to the autonomous working system, reliable and efficient communication between the base station and the mobile station further needs to be ensured.

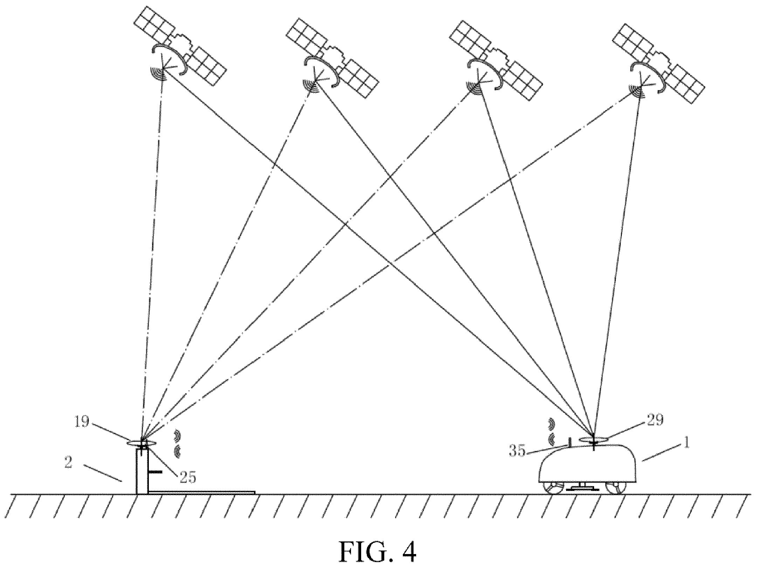

As shown in FIG. 4, in this embodiment, the base station receives a satellite signal by using a GPS antenna, and sends acquired carrier phase information to the mobile station by using the communications module. The communications module includes a radio station and a radio station antenna, and may also include a Sub-1G module, a Wi-Fi module, and a 2G/3G/4G/5G module. The mobile station also receives a satellite signal by using a GPS antenna, and also receives, by using a communications module corresponding to the base station, a carrier phase signal acquired by the base station, to calculate relative position coordinates of the mobile station with respect to the base station. The relative position coordinates include longitude and latitude, and may further include altitude. The precision may reach a centimeter level.

In this embodiment, the mobile station may selectively communicate with one of a plurality of different base stations. For example, the mobile station may selectively communicate with a first base station or a second base station. Specifically, the autonomous working system includes a plurality of base stations, or, base stations of different autonomous working systems located within a region may be shared. The mobile station is switched among the plurality of base stations. When an exception occurs during communication between the mobile station and the first base station, the mobile station may be autonomously switched to the second base station for communication.

In this embodiment, a satellite based augmentation system may further be used to implement DGPS navigation.

In this embodiment, the base station and the mobile station may further communicate by using a lora technology.

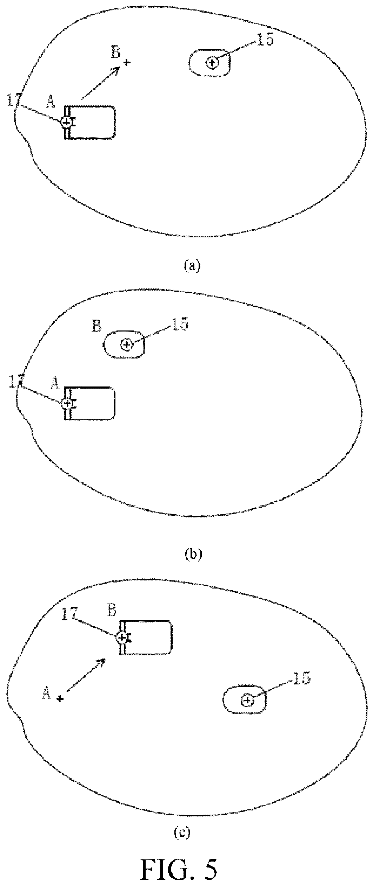

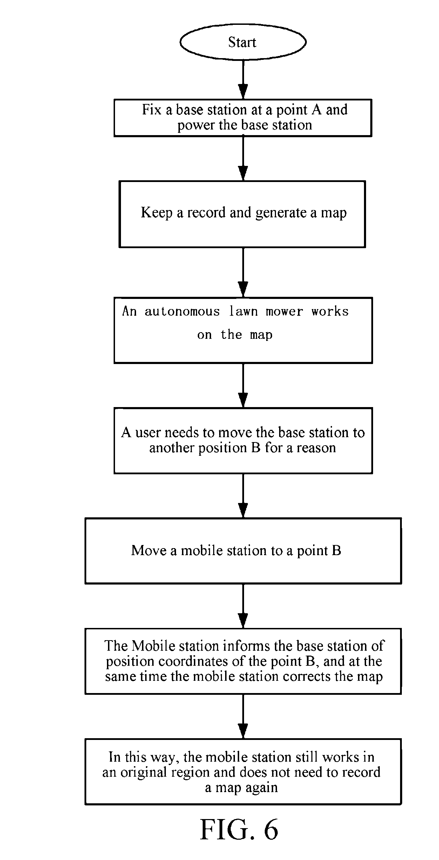

In this embodiment, DGPS positioning is implemented based on that the base station is fixed at a position. When the base station moves, position coordinates output by the mobile station have deviations. To avoid the trouble of recording a map again after the base station moves, in this embodiment, the mobile station is used to obtain a movement position of the base station, and the obtained movement position is used to correct the generated map. Referring to FIG. 5 and FIG. 6, a map correction process is as follows: 1). The base station 17 is fixed at a point A, and the mobile station 15 keeps a record and generates a map. 2). As shown in FIG. 5(a), the user intends to move the base station 17 to another position point B for a reason. For example, the user needs to build a flower bed at the point A. 3). As shown in FIG. 5(b), the mobile station 15 is moved to the point B, and the mobile station 15 sends position coordinates of the point B to the base station 17. 4). As shown in FIG. 5(c), the base station 17 is moved to the position B, and the base station 17 corrects its position. Meanwhile, the mobile station 15 learns of a deviation of the position of the base station 17, and corrects the map according to the offset. The corrected map overlaps with the map before correction. Therefore, it is not necessary to record a map again.

In the first embodiment of the present invention, the mobile station includes a path generation module generating a path plan according to the map of the working region. First, the working region is divided according to the boundary, an obstacle, a passage or the like of the working region. With the division of the working region, the autonomous lawn mower implements more efficient coverage. For example, the working region is divided into two sub-working regions connected through a passage. When performing grass cutting work, the autonomous lawn mower first completes coverage in one of the sub-working regions, and then enters the other sub-working region through the passage to work. In this way, the autonomous lawn mower is prevented from working inefficiently for moving repeatedly between the two ends of the passage. In another example, based on two parts separated by an obstacle in the working region, the working region is divided into two sub-regions, and the autonomous lawn mower is prevented from encountering an obstacle frequently. According to the shape of the boundary, the boundary may further be divided into different sub-regions based on a portion with a regular shape and a portion with an irregular shape. In this way, the autonomous lawn mower may cover a regular sub-region by using a regular path and cover an irregular sub-region by using a random path. In this embodiment, an overlapping portion is provided between adjacent sub-regions, to ensure coverage on the portion between the adjacent sub-regions. In this embodiment, the area of a region in which the autonomous lawn mower can work one time is estimated according to the capacity of a battery pack to determine the size of a section. In this embodiment, the working region may further be divided according to the growth of plants, so that the autonomous lawn mower works at higher cutting power for a longer cutting time in a region with dense plants and works at lower cutting power for a shorter cutting time in a region with sparse plants. In this embodiment, the working region may further be divided according to the priorities of regions. For example, a front yard and a back yard of a user are different sub-regions, so that the autonomous lawn mower works in the front yard and the backyard by using different working strategies. Certainly, the working region may further be divided according to comprehensive factors such as a quantity of obstacles.

After region division is completed, a path of the autonomous lawn mower in each sub-region is planned. A preset path of the autonomous lawn mower in each sub-region may be a regular path such as parallel paths and a spiral path or may be a random path.

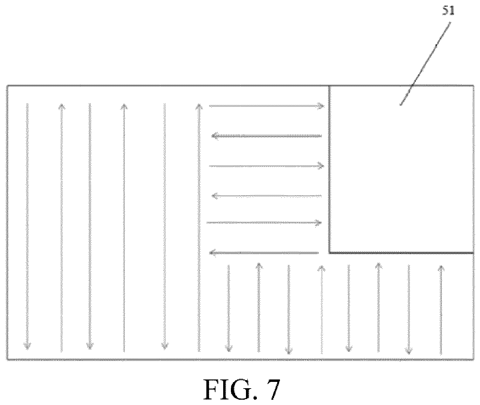

In this embodiment, different paths may be planned in a same sub-working region. A sub-working region D shown in FIG. 7 includes a building 51. It may be predicted that satellite signals are poor in a region near the building 51 due to blockage by the building, and the navigation module has low positioning precision. If the autonomous lawn mower moves on a path parallel to an edge of the building 51, when the autonomous lawn mower moves near the building 51, the navigation module keeps outputting low precision signals. As a result, the autonomous lawn mower may fail to move on a planned path, or move inefficiently. To avoid the foregoing condition, a path in a region on an edge of the building 51 may be planned to be a path perpendicular to the edge of the building 51. In this way, the navigation module outputs a low precision signal only when the autonomous lawn mower is near an edge of the building 51. When the autonomous lawn mower is far away from an edge of the building 51, the navigation module outputs a high precision signal. When the autonomous lawn mower is near an edge of the building 51, satellite signals are poor, positioning errors of the inertial navigation apparatus accumulate, and the positioning precision gradually decreases. When the autonomous lawn mower is far away from an edge of the building 51, satellite signals become strong again and may be used to calibrate inertial navigation errors. Therefore, with the movement on such a path, it can be ensured that the navigation module outputs strong positioning signals most of the time. In this embodiment, a path plan is autonomouslygenerated by a path generation module, and certainly may be alternatively manually adjusted by the user according to the condition of the working region. Alternatively, the autonomous lawn mower may be adjusted during movement in real time according to the precision of a positioning signal. The case shown in FIG. 7 is used as an example. During movement, the autonomous lawn mower may adjust in real time directions of walking back and forth.

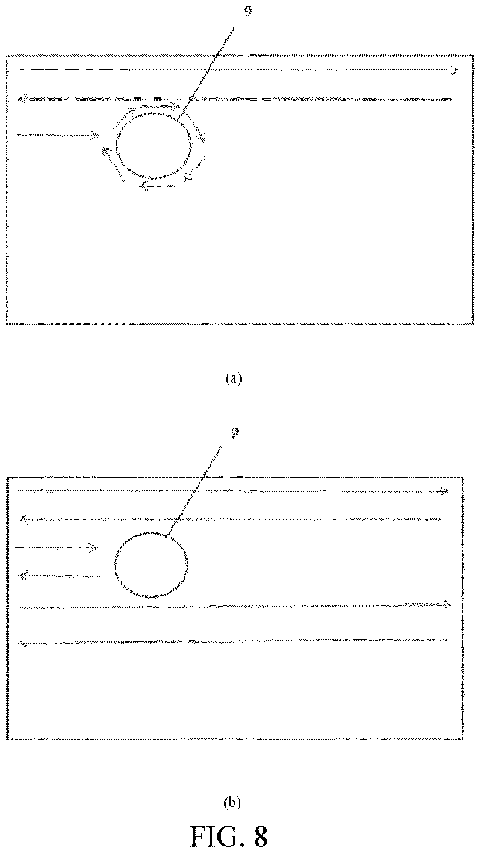

As shown in FIG. 8(a) and FIG. 8(b), in this embodiment, when encountering an obstacle, the autonomous lawn mower may move around the obstacle or may turn around. If the autonomous lawn mower moves around the obstacle when encountering the obstacle, the navigation module may be used to generate a vector image for moving around the obstacle.

In this embodiment, during the movement, the autonomous lawn mower can distinguish a moving obstacle from a stationary obstacle. The stationary obstacle is an obstacle having a fixed position in the working region, and is usually an obstacle recorded on the map. If the autonomous lawn mower repeatedly encounters an obstacle at a same position during movement but the obstacle is not recorded on the map, the autonomous lawn mower may determine that the obstacle is a newly found stationary obstacle. The moving obstacle is an obstacle that appears at an indefinite position in the working region, and is usually an obstacle that the autonomous lawn mower temporarily encounters during movement and appears at a same position occasionally. The moving obstacle may be a human, an animal or the like that appears in the working region. The autonomous lawn mower distinguishes a moving obstacle from a stationary obstacle according to whether an obstacle is recorded on the map or according to a frequency of encountering an obstacle at a same position, and uses different obstacle avoidance strategies. The obstacle avoidance strategies include moving around an obstacle, turning around, and the like.

In this embodiment, the autonomous lawn mower adjusts a movement range according to the condition of a positioning signal during movement. When the autonomous lawn mower moves to a position with poor positioning signals, the movement range is shrunk and the autonomous lawn mower continues moving within a small range or the autonomous lawn mower stops moving.

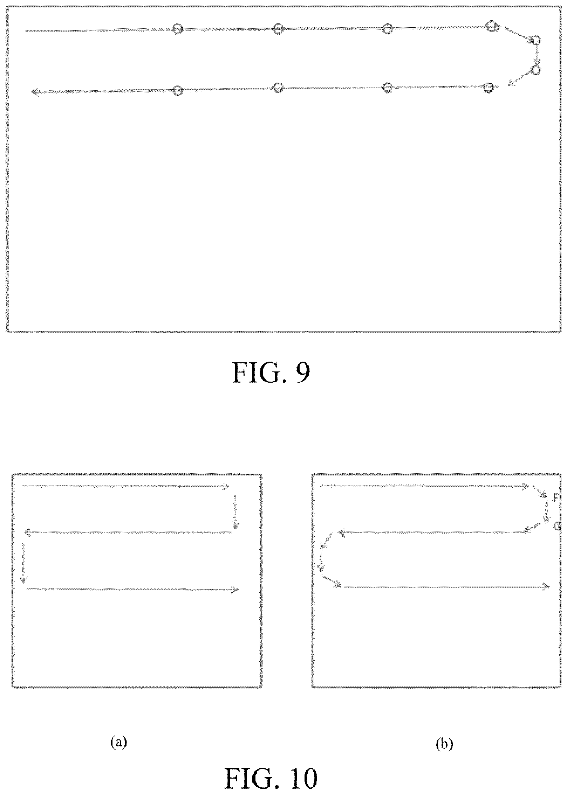

In this embodiment, the navigation module further includes a gyroscope configured to control the autonomous lawn mower to move along a straight line. When the autonomous lawn mower moves along a preset path, the gyroscope and a DGPS positioning signal are used in combination to perform navigation. As shown in FIG. 9, the preset path is divided into a plurality of segments. When the autonomous lawn mower starts to move, a moving direction is determined. When moving on each segment, the autonomous lawn mower uses the gyroscope to perform navigation. The gyroscope is configured to control the autonomous lawn mower to move along a straight line, to prevent the moving direction of the autonomous lawn mower from deviating. After the autonomous lawn mower completes movement on a segment of the path, a DGPS positioning signal is used to calibrate the moving direction. Specifically, the control module determines whether the current position of the autonomous lawn mower is on the preset path. If the current position of the autonomous lawn mower deviates from the preset path, the moving direction of the autonomous lawn mower is adjusted to enable the autonomous lawn mower to return to the preset path. When moving along a next segment of the path, the autonomous lawn mower moves along a straight line again in a calibrated direction by using the gyroscope. As the autonomous lawn mower moves, if determining that a distance by which the current position of the autonomous lawn mower deviates from the preset path is greater than a preset value, the control module may calibrate the moving direction of the autonomous lawn mower in real time, or may redraw segments.

As shown in FIG. 10(b), in this embodiment, the autonomous lawn mower moves along parallel paths. When reaching the boundary, the autonomous lawn mower steers to move in an opposite direction. When steering, the autonomous lawn mower covers a plurality of points F and G between adjacent parallel paths, to ensure complete coverage, thereby avoiding a problem that a region near the boundary is not covered due to steering by a right angle (referring to FIG. 10(a)).

In this embodiment, as the autonomous lawn mower moves, if an exception occurs in communication between the base station and the mobile station, for example, communication is interrupted or a DGPS signal is poor and as a result the navigation module keeps outputting low precision positioning signals, the autonomous lawn mower is controlled to adjust a movement manner. When the autonomous lawn mower adjusts the movement manner, the autonomous lawn mower is switched between working states. For example, the autonomous lawn mower is switched to a random walking mode, or returns to the charging station, or enters a search mode to search for strong satellite signals. Alternatively, when the autonomous lawn mower adjusts the movement manner, the autonomous lawn mower enables the task execution module to stop working, reverse, steer, stop or perform another operation.

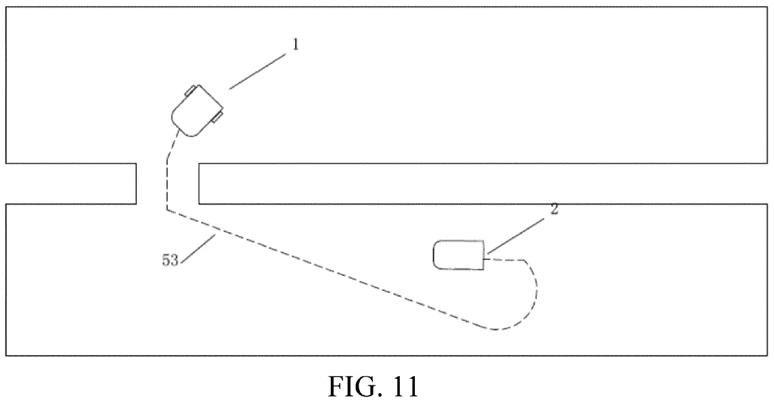

In this embodiment, a path generation module is further configured to generate a return path. The working region shown in FIG. 11 is used as an example, and currently the charging station 2 is located inside the working region. When the autonomous lawn mower 1 needs to return to the charging station 2, a path generation module computes a shortest path from the autonomous lawn mower 1 to the charging station 2 according to information about the current position of the autonomous lawn mower 1 and the map information and generates a return path 53. The control module controls the autonomous lawn mower 1 to move along the return path 53 to return to the charging station 2. The computation of the shortest path is related to the position of the charging station 2, and is further related to obstacle distribution in the working region and whether there is a passage between the autonomous lawn mower 1 and the charging station 2. The autonomous lawn mower 1 passes through the fewest raster cells when moving along the shortest path. In this embodiment, the control module records the return path of the autonomous lawn mower 1. When the autonomous lawn mower 1 starts to return again, the control module compares a newly generated return path with a previous return path or several previous return paths to determine whether an overlapping portion exists between the newly generated return path and the previous return path or the several previous return paths. If an overlapping portion exists, the return path is modified to avoid a return path overlap. For example, a part of the return path is offset by a distance. By using the foregoing method, if the autonomous lawn mower 1 needs to pass through a passage when returning to the charging station 2, an overlap of a part of path from the passage to the charging station 2 can be effectively avoided, thereby preventing the autonomous lawn mower 1 from repeatedly returning along a same segment of the path to crush the lawn.

In a seventh embodiment of the present invention, a method for generating a return path by the path generation module is different from the method in the first embodiment. As shown in FIG. 7, after the map generation module generates the map, a path generation module sets several return paths 53 according to the generated map. When needing to return to the charging station 2, the autonomous lawn mower 1 moves to one of the return paths 53. Specifically, the control module determines shortest distances from the autonomous lawn mower 1 to the several return paths 53, selects a closest return path 53, and controls the autonomous lawn mower 1 to move to the nearest return path 53 along a path with the shortest distance and return to the charging station 2 along the return path 53. Certainly, the autonomous lawn mower 1 may alternatively move to the nearest return path 53 randomly. Alternatively, when needing to return to the charging station 2, the autonomous lawn mower 1 moves randomly, and when the control module determines that the autonomous lawn mower 1 is located on one of the return paths 53, the autonomous lawn mower 1 is controlled to return to the charging station 2 along the return path 53. By using the foregoing method, the autonomous lawn mower 1 can be prevented from returning along a same path to crush the lawn. It may be understood that a return path may be alternatively recorded by the user during map recording. Specifically, the user holds the mobile station and moves from different positions in the working region to the charging station, and positions covered by the movement are recorded to form the return path.

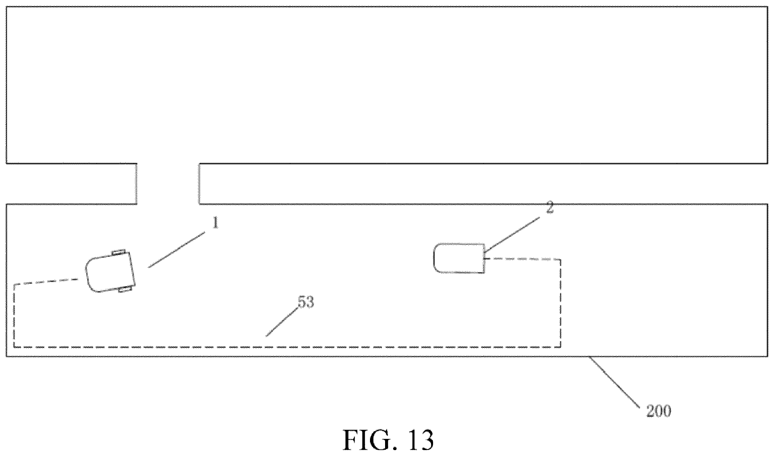

In an eighth embodiment of the present invention, a method for generating a return path by the path generation module is different from the method in the first embodiment. As shown in FIG. 13, when needing to return to the charging station 2, the autonomous lawn mower 1 first moves to the boundary 200, moves to the position of the charging station 2 along the boundary 200, and then moves to the charging station 2. Specifically, the path generation module determines a point, on the boundary 200, having the shortest distance from the autonomous lawn mower 1 according to the current position of the autonomous lawn mower 1 and the position of the boundary 200, connects the current position of the autonomous lawn mower 1 and the point to form a first segment of the path, computes, according to the position of the point and the position of the charging station 2, the shortest path for the autonomous lawn mower 1 to move from the point along the boundary 200 and then move from the boundary 200 to a position right in front of the charging station 2, generates a second segment of the path according to the computed shortest path, and joins the first segment of the path and the second segment of the path to generate the return path 53. In this embodiment, when the charging station 2 is located on the boundary 200, the autonomous lawn mower 1 can directly move to the position right in front of the charging station 2 along the boundary 200. When the charging station 2 is not located on the boundary 200, the autonomous lawn mower 1 moves towards the charging station 2 along the boundary 200 and then reaches the position right in front of the charging station 2. In this embodiment, the autonomous lawn mower 1 moves along the boundary 200 on a different path each time. Specifically, the autonomous lawn mower 1 moves along the boundary 200 at a variable distance from the boundary 200. That is, during each return, the autonomous lawn mower 1 moves along the boundary 200 at a different distance from the boundary 200. In this way, the autonomous lawn mower 1 can be prevented from returning along the boundary 200 at a fixed distance to crush the lawn.

In the first embodiment of the present invention, after the autonomous lawn mower 1 moves to the position right in front of the charging station 2, for example, at about 1 m in front, a docking process is started. Because a docking angle, a tilt angle, and the like are recorded during map recording, the autonomous lawn mower 1 may be docked in a constant direction based on the information, so that a docking error is mitigated.

In the first embodiment of the present invention, the autonomous lawn mower may further autonomously determine a work schedule according to properties such as an area and a shape of a map. The work schedule includes a working time for each sub-region, a work order for the sub-regions, a quantity of times of covering each sub-region, and the like.

In this embodiment, a DGPS clock may be used to replace a clock chip.

In this embodiment, the navigation module and an environment detection sensor are combined to address a safety problem. The environment detection sensor includes a step sensor, a lawn sensor, an optical sensor, a camera, a radar, an ultrasound sensor, a collision detection sensor, and the like. When the environment detection sensor detects an exception environment, the navigation module is used to record the current position and a corresponding exception on a map. When the autonomous lawn mower moves to the position, the movement manner of the autonomous lawn mower is adjusted to avoid a safety accident.

In this embodiment, the map and the path are respectively generated by the map generation module and the path generation module of the mobile station. It may be understood that in other embodiments, the control module of the autonomous lawn mower obtains position coordinates recorded by the mobile station, and the control module may generate the map and the path.

In a ninth embodiment of the present invention, the charging station is a wireless charging station. The autonomous lawn mower can approach the charging station from any direction to perform docking. Therefore, according to the current position of the autonomous lawn mower and the position of the charging station, the autonomous lawn mower can be conveniently guided by using DGPS navigation to return to the charging station and be docked to the charging station.

### Exemplary dividing method

As discussed above, to enable a self-moving device to safely and efficiently cover a working region, the working region of the self-moving device needs to be divided.

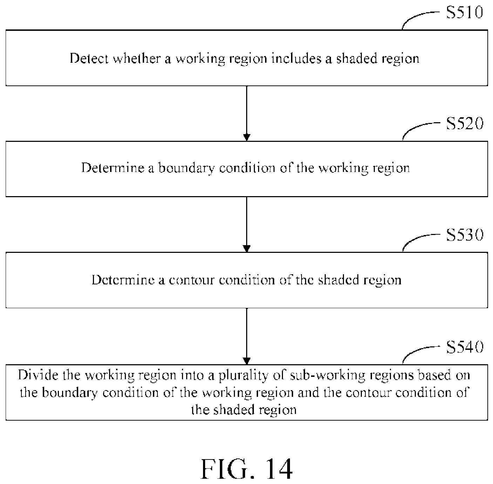

FIG. 14 is a schematic flowchart of a dividing method for a working region of a self-moving device according to an embodiment of the present invention. As shown in FIG. 14, the dividing method for a working region of a self-moving device according to this embodiment including: S510, detecting whether a working region includes a shaded region, the shaded region being a region in which a positioning signal received by the self-moving device does not satisfy a quality condition; S520, determining a boundary condition of the working region; S530, determining a contour condition of the shaded region; and S540, dividing the working region into a plurality of sub-working regions based on the boundary condition of the working region and the contour condition of the shaded region, a part of the shaded region in any sub-working region being a sub-shaded region, the sub-shaded region having a length direction and a width direction, and the division enabling a length of the sub-shaded region in the width direction to be less than a predetermined threshold. The predetermined threshold is less than 10 meters or 5 meters or 2 meters.

In some embodiments, the sub-shaded region has an approximately regular shape, for example, an approximately rectangular shape. In this case, the length direction and the width direction are respectively a long side direction and a short side direction of a rectangle. Alternatively, the sub-shaded region has an approximately elliptical shape. In this case, the length direction and the width direction are respectively a major axis direction or a minor axis direction of an ellipse. In some embodiments, the sub-shaded region has an irregular shape. In this case, a mathematical method known in the industry may be used to approximate the irregular shape into a regular shape for processing. Alternatively, another method may be used to determine the length direction and the width direction of the sub-shaded region. Subsequent steps are then performed based on the determined length direction and width direction.

In some embodiments, if the width direction of the shaded region is already less than the predetermined threshold and there is no other case in which the shaded region needs to be divided, it is not necessary to divide the shaded region into different sub-regions, and the sub-shaded region is the shaded region itself

In some embodiments, if the width direction of the shaded region is greater than the predetermined threshold, the shaded region is divided into a plurality of sub-regions. For each sub-region, a width of the sub-shaded region is less than the predetermined threshold. A specific division manner is a known mathematical processing process, and details are not described herein.

After the divided sub-regions are obtained, the self-moving device works in the sub-regions in the following manner. That is, the dividing method for a working region of a self-moving device according to this embodiment further includes: controlling the self-moving device to travel in the width direction in the sub-shaded region.

Herein, a person skilled in the art may understand that if the self-moving device is controlled to travel in the width direction, there may be an error between a travel direction and the width direction. To be specific, provided that the error between the travel direction of the self-moving device and the width direction is within a range, it is considered that the self-moving device travels in the width direction in the sub-shaded region.

Because the self-moving device travels in the width direction and a length in the width direction is less than that in the length direction, it may be understood that a travel distance in the shaded region in the width direction is shorter than that in the length direction, so that an accumulated error is relatively small, and positioning is more accurate. Further, because the predetermined threshold is set, the accumulated error may be controlled in an acceptable range.

It may be understood that it is necessary to control an accumulated length of a path covered by the self-moving device in the shaded region, so as to control the accumulated error to be within a predetermined acceptable range. Therefore, the approximate width direction should be construed relatively flexibly, so that the travel distance of the self-moving device in the direction is usually less than the travel distance in the length direction. In an embodiment, the direction is between the width direction minus 30° and the width direction plus 30°. In another optional embodiment, the direction is between the width direction minus 20° and the width direction plus 20°, the width direction minus 15° and the width direction plus 15°, the width direction minus 10° and the width direction plus 10°, the width direction minus 5° and the width direction plus 5° or the width direction minus 3° and the width direction plus 3°.

Specifically, the traveling in the width direction in the sub-shaded region includes:
entering the sub-shaded region from one side approximately in the width direction; and keeping traveling in the width direction to reach the other side of the sub-shaded region.

Further, the traveling in the width direction in the sub-shaded region further includes:
leaving the sub-shaded region from the other side; or
turning around at the other side to leave from the side, where a travel direction after the turnaround is approximately the width direction.

Herein, the shaded region mentioned in this embodiment is a region in which a positioning signal, for example, a satellite positioning signal, received by the self-moving device has poor signal quality. Specifically, the shaded region may be determined by determining whether a positioning signal received by the self-moving device satisfies the quality condition. The positioning signal may be directly output by a positioning module, for example, a GPS module, or may be output by a processor of mobile station by combining various input data. Preferably, the positioning signal is output by the processor of the mobile station by combining various input data. The reason is that the positioning module only outputs a current signal quality index, while the processor further considers a quantity of signal sources, for example, a quantity of satellites, of currently received signals. Apparently, when the quantity of signal sources is larger, the signal quality is better. If signals can be received from only a small number of signal sources, even if the positioning signal output by the positioning module has a very high precision grade, the overall signal quality is not necessarily desirable. Therefore, in the dividing method for a working region of a self-moving device in this embodiment, the positioning signal involves the quantity of signal sources and the signal quality of the signal sources.

For example, a GPS system outputs positioning precision information of the GPS system when an RTK positioning technology of the GPS system is used. For example, in an NMEA table, GPGGA outputs 4 to represent high positioning precision that may generally reach a centimeter level, and outputs 3 to represent relatively poor positioning that generally reaches only a decimeter level. 1 or 2 represents that the positioning precision only reaches a meter level. Based on this, in the dividing method for a working region of a self-moving device in this embodiment, for example, any region may be determined as the shaded region unless 4 is output.

Because the self-moving device cannot receive a positioning signal, for example, a satellite signal, in the shaded region, positioning precision is reduced, and high precision positioning can only be maintained for a short time (referred to as a tolerance time). Specifically, a working time of a positioning system of an autonomous lawn mower in the shaded region generally cannot exceed 1 minute to 2 minutes. Therefore, to ensure positioning precision of the self-moving device in the working region, the self-moving device cannot cross a shaded region with a relatively large area. Therefore, in the dividing method for a working region of a self-moving device in this embodiment, a working region is divided based on a contour shape of the shaded region, so that the shaded region with a relatively large area is divided into shaded regions with small areas, so as to form different paths to save the self-moving device from crossing the shaded region with a relatively large area. In the dividing method for a working region of a self-moving device in this embodiment, a short side of each of the plurality of sub-working regions is less than a predetermined length threshold, for example, 10 meters. In addition, the self-moving device enters each sub-working region in a short side direction during working. In this way, duration during which the self-moving device remains in the shaded region does not exceed the foregoing tolerance time, thereby ensuring that the self-moving device can maintain high precision positioning even if working in the shaded region.

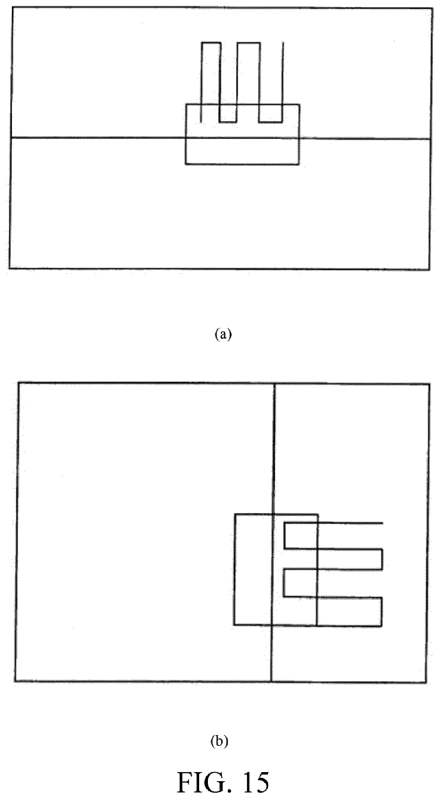

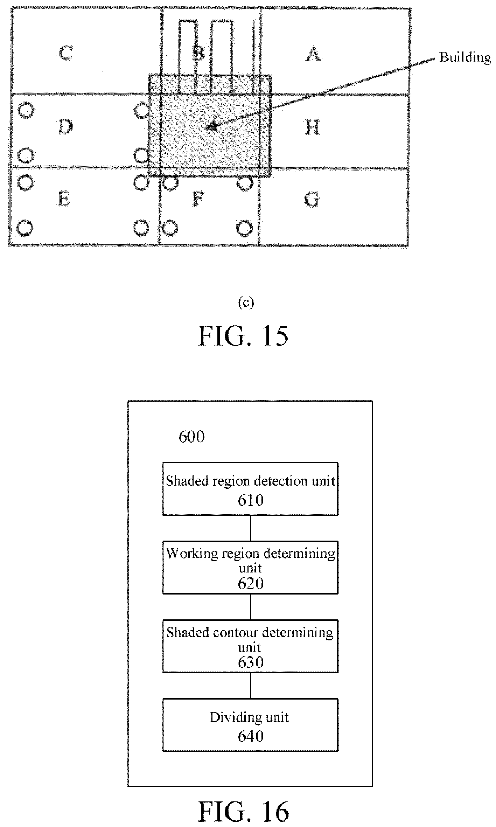

FIG. 15(a) to FIG. 15(c) are schematic diagrams of performing division based on a shaded region according to an embodiment of the present invention. As shown in FIG. 15(a) and FIG. 15(b), when a building is rectangular, a shaded region is also rectangular. Therefore, a direction of a narrow side of the shaded region is selected to perform division, so that the self-moving device walks in the direction of the narrow side of the shaded region. An actual application scenario is shown in FIG. 15(c), a building (or another obstacle) exists in a working region, and signals are blocked around the building to form the shaded region. The working region is divided into a plurality of sub-regions according to the shaded region. In this way, the self-moving device may enter the shaded region in a plurality of directions to perform working. A walking direction of the self-moving device is basically perpendicular to a contour line of the shaded region. For example, when the autonomous lawn mower cuts grass in the shaded region, it can be ensured that the autonomous lawn mower cuts the grass in the shaded region as completely as possible. Herein, the shaded region may be known during the generation of a map or may be learned by the self-moving device during working. The latter will be further described below.

Moreover, as discussed above, because the self-moving device needs to work in a range of the working region, during division, a boundary condition of the working region also needs to be considered.

In the dividing method for a working region of a self-moving device according to this embodiment, the dividing the working region into a plurality of sub-working regions based on the boundary condition of the working region and the contour condition of the shaded region includes: determining whether an area of the shaded region is greater than a predetermined area threshold; and, dividing the working region into the plurality of sub-working regions in response to determining that the area of the shaded region is greater than the predetermined area threshold.

That is, if the area of the shaded region is not large, division of the working region may be skipped. That is, in the working region, as few as possible divided regions are ensured to ensure efficient coverage of the self-moving device in the working region. In addition, if signal quality is good, a quantity of times that the self-moving device turns around should be kept as small as possible, thereby improving working efficiency of the self-moving device.

In addition, if the area of the shaded region is relatively large, for example, as shown in FIG. 15(c), the self-moving device preferably enters the shaded region in different directions from the plurality of divided sub-working regions, so that duration during which the self-moving device remains in the shaded region does not exceed the foregoing tolerance time.

Therefore, each time when the self-moving device enters the shaded region, to shorten the duration during which the self-moving device moves in the shaded region, preferably, the self-moving device enters the shaded region in a direction of a narrow side of a contour of the shaded region and leaves the shaded region in the same direction, so that the self-moving device covers a shortest distance in the shaded region.

Moreover, if the self-moving device enters the shaded region in different directions based on the plurality of divided sub-working regions to perform working, the number of times that the self-moving device enters the shaded region to work is a predetermined number of times. For example, the self-moving device enters the shaded region from two ends of the shaded region respectively to work, so that the self-moving device enters the shaded region twice to work. In this case, if the working region in which the self-moving device enters the shaded region twice to work cannot cover the shaded region, division further needs to be performed.

That is, in the dividing method for a working region of a self-moving device in this embodiment, the dividing the working region into a plurality of sub-working regions based on the boundary condition of the working region and the contour condition of the shaded region includes: dividing the working region into the plurality of sub-working regions based on the boundary condition of the working region and the contour condition of the shaded region, so that the self-moving device enters the shaded region in different directions in the plurality of sub-working regions.

In addition, in the dividing method for a working region of a self-moving device in this embodiment, that the self-moving device enters the shaded region in different directions in the plurality of sub-working regions includes: determining whether a predetermined number of movements of the self-moving device in different directions cover the shaded region; and, further dividing, in response to that the predetermined number of movements of the self-moving device in different directions do not cover the shaded region, the plurality of sub-working regions obtained after the division.

In the dividing method for a working region of a self-moving device in this embodiment, the dividing the working region into a plurality of sub-working regions based on the boundary condition of the working region and the contour condition of the shaded region includes: dividing the plurality of sub-working regions so that adjacent working regions of the plurality of sub-working regions have an overlapping portion.

That is, overlapping divided regions are used to provide an overlapping portion between adjacent sub-working regions, so that it is ensured that the self-moving device can cover edge parts of all the divided regions.

In the dividing method for a working region of a self-moving device in this embodiment, the dividing the working region into a plurality of sub-working regions based on the boundary condition of the working region and the contour condition of the shaded region further includes: detecting a working area corresponding to a working time of a power supply of the self-moving device; determining whether an area of each of the plurality of sub-working regions is greater than the working area; and, further dividing the sub-working region in response to determining that an area of one of the plurality of sub-working regions is greater than the working area, so that an area of the working region obtained after the division is less than the working area.

That is, a maximum working area of the self-moving device is restricted by a working time of a power supply, for example, a battery pack, of the self-moving device. Division is further performed according to that the working time of the power supply, for example, a working time of a single battery pack, is exceeded, so as to prevent the self-moving device from returning to a charging station to perform charging during working in a sub-working region, thereby improving working efficiency of the self-moving device. Herein, after returning to the charging station to perform charging, the self-moving device needs to find again an interruption point during previous working, resulting in low working efficiency.

Therefore, for an open region with a large area, for example, a Golf course, even if the region has very few shaded regions or obstacles, the region needs to be divided based on the foregoing reason.

As shown in FIG. 8(a) and FIG. 8(b), an obstacle, for example, an obstacle 9, may exist in the working region. When an obstacle is encountered, a size of the obstacle may be determined. A divided region does not need to be formed for a small obstacle. Instead, the self-moving device moves around the small object (as shown in FIG. 8(a)) or turns around at the small object (as shown in FIG. 8(b)). A vector image of moving around the obstacle may be formed by using a DGPS system or an inertial navigation system, so that the self-moving device moves around the obstacle. In addition, division may be performed for a large obstacle. The reason is that if an obstacle is relatively large or there are a relatively large number of obstacles in the working region, the self-moving device cannot traverse all regions one time. If division is not performed, some regions may fail to be covered. Therefore, division is performed for an obstacle, so that a coverage ratio of the working region can be ensured.

Therefore, the dividing method for a working region of a self-moving device in this embodiment further includes: detecting whether an obstacle exists in the working region; determining whether a size of the obstacle is greater than a predetermined size threshold; and dividing the working region based on the obstacle in response to that the size of the obstacle is greater than the predetermined size threshold.

Moreover, the dividing method for a working region of a self-moving device in this embodiment further includes: skipping division of the working region in response to that the size of the obstacle is less than the predetermined size threshold; and controlling the self-moving device to move around the obstacle or turn around at the obstacle to move on.

In addition, in the dividing method for a working region of a self-moving device in this embodiment, stationary and moving obstacles may further be distinguished. Specifically, obstacles in the working region are recorded on a map of the working region to form an "obstacle map". The self-moving device detects an obstacle via, for example, a sensor, during working, and determines whether to update the obstacle map according to a detection result. When the number of times that the self-moving device encounters an obstacle at a position reaches the threshold, the obstacle map is updated, and division is performed again according to the updated map. The self-moving device may move around a stationary obstacle or turn around at a stationary obstacle, and move around a moving obstacle.

Therefore, in the dividing method for a working region of a self-moving device in this embodiment, the determining whether a size of the obstacle is greater than a predetermined threshold includes: detecting that a state of the obstacle is moving or stationary; detecting, in response to that the state of the obstacle is stationary, whether the size of the obstacle is greater than the predetermined size threshold.

Moreover, the dividing method for a working region of a self-moving device in this embodiment further includes: skipping division of the working region in response to that the state of the obstacle is moving; and controlling the self-moving device to move around the obstacle or turn around at the obstacle to move on.

In addition, as shown in FIG. 1, a narrow passage 400 may exist in the working region. In this case, the passage is separately presented. For example, the passage is marked when a map is created, or the passage is recognized by using a recognition algorithm. Two regions connected by the passage may be used as sub-working regions.

As discussed above, a common scenario of a passage is that the front yard and back yard of a user's house are connected via one passage in the middle. If division is not performed based on a passage, the self-moving device may work in the front yard for a while and then move to the back yard to work, and then runs out of power and returns to perform charging. For example, when the autonomous lawn mower performs grass cutting work in the front yard and the back yard, if the foregoing case occurs, it seems to a customer that neither of the front yard and the back yard has been completely cut. A passage division technology in the dividing method for a working region of a self-moving device in this embodiment is used to recognize a passage or a user defines a passage, so that the self-moving device considers the front yard and the back yard as two independent regions, and finishes working in one region before moving to the other region. In this way, the customer may have better use experience.

Therefore, the dividing method for a working region of a self-moving device in this embodiment further includes: detecting whether a passage exists in the working region; and dividing, in response to that a passage exists in the working region, the working region into a first sub-working region on one side of the passage and a second sub-working region on the other side of the passage.

In addition, the dividing method for a working region of a self-moving device in this embodiment further includes: detecting a vegetation growth condition in the working region; and dividing the working region based on the vegetation growth condition.

That is, for the self-moving device such as the autonomous lawn mower, division may further be performed according to a vegetation health/growth condition. In addition, division may further be performed by combining various factors.

After the working region is divided, the self-moving device further determines strategies for covering different sub-regions. The strategies include the following cases:
1) Circle strategy: As shown in FIG. 15(c), the self-moving device works in an order of A-B-C-D-E-F-G-H.
2) Neighbor strategy: The self-moving device finishes work in one sub-working region and then enters an adjacent region to work.
3) Search for a nearest starting point: FIG. 15(c) is still used as an example. Several starting points are set in advance for each sub-working region, and are usually vertex positions. After finishing work in one sub-working region, the self-moving device searches for a nearest starting point and moves to a sub-working region corresponding to the starting point to work.
4) Search for an optimal point: An optimal point is calculated based on the foregoing starting points and an algorithm. Consideration factor in the algorithm may include moving as few obstacles as possible, walking directly, and the like. This may show a user that the self-moving device is highly intelligent.

In addition, in the dividing method for a working region of a self-moving device in this embodiment, a dividing strategy may keep being updated as the self-moving device works. For example, during working, the autonomous lawn mower evaluates a point that the autonomous lawn mower walks through, for example, to find out whether the point is in the shaded region or whether there is an obstacle at the point, updates the map, and adjusts the dividing strategy according to updated map information.

Specifically, when the self-moving device works for the first time, there is only contour information of a boundary, an obstacle, and the like on the map but no detail information about the interior of the map. At this time, the self-moving device decides that the remaining regions are free of shaded regions, and first performs division once to work. During working, the self-moving device draws detail information on the map according to information received by the GPS. In this case, being restricted by a working time (the working time generally does not exceed 1 minute to 2 minutes) of the self-moving device in a shaded region, the self-moving device may fail to work in some regions.

After completing work for the first time, the self-moving device performs division again according to known information of the interior and attempts to obtain a map of an unknown region through walking. After repeated walking, the self-moving device usually can update all map information. A dividing strategy updated after all information is obtained is relatively preferred.

Certainly, during working, the self-moving device may be involved in some accidents. For example, the self-moving device slides down a slope, deviates from a path, or is moved by a user. In this case, the self-moving device performs division again according to a region in which the self-moving device has finished working and plans a walking path.

Moreover, if an unworked region, for example, a region in which the autonomous lawn mower has not cut grass, exists in the working region, a divided region is added for the unworked region, that is, the unworked region is used as a sub-working region.

Therefore, the dividing method for a working region of a self-moving device in this embodiment further includes: in a process of controlling the self-moving device to move in the working region, obtaining map information of a path covered by the self-moving device; and updating a dividing strategy of the working region based on the map information.

Moreover, the dividing method for a working region of a self-moving device in this embodiment further includes: determining whether an unworked region in which the self-moving device has not performed work exists in the working region; and dividing the working region to use the unworked region as a new sub-working region.

### Exemplary dividing apparatus and system

FIG. 16 is a schematic block diagram of a dividing apparatus according to an embodiment of the present invention. As shown in FIG. 16, the dividing apparatus 600 is configured to divide a working region of a self-moving device, and includes: a shaded region detection unit 610, configured to detect whether a shaded region exists in the working region, the shaded region being a region in which a positioning signal received by the self-moving device does not satisfy a quality condition; a working region determining unit 620, configured to determine a boundary condition of the working region; a shaded contour determining unit 630, configured to determine a contour condition of the shaded region detected by the shaded region detection unit 610; and a dividing unit 640, configured to divide the working region into a plurality of sub-working regions based on the boundary condition of the working region determined by the working region determining unit 620 and the contour condition of the shaded region determined by the shaded contour determining unit 630, a part of the shaded region in any sub-working region being a sub-shaded region, the sub-shaded region having a length direction and a width direction, and the division enabling a length in the width direction to be less than a predetermined threshold.

In an example, in the dividing apparatus 600, the predetermined threshold is less than 10 meters or 5 meters or 2 meters.

In an example, the dividing apparatus 600 further includes: a control unit, configured to control the self-moving device to travel in the width direction in the sub-shaded region.

In an example, in the dividing apparatus 600, the control unit is configured to: control the self-moving device to enter the sub-shaded region from one side in the width direction; and, control the self-moving device to keep traveling in the width direction to reach the other side of the sub-shaded region.

In an example, in the dividing apparatus 600, the control unit is further configured to: control the self-moving device to leave the sub-shaded region from the other side; or, control the self-moving device to turn around at the other side to leave from the side, where a travel direction after the turnaround is the width direction.

In an example, in the dividing apparatus 600, the dividing unit 640 is configured to: determine whether an area of the shaded region is greater than a predetermined area threshold; and, divide the working region into the plurality of sub-working regions in response to determining that the area of the shaded region is greater than the predetermined area threshold.

In an example, in the dividing apparatus 600, the dividing unit 640 is configured to: divide the working region into a plurality of sub-working regions based on the boundary condition of the working region and the contour condition of the shaded region; and control the self-moving device to enter the shaded region in different directions in the plurality of sub-working regions.

In an example, in the dividing apparatus 600, the dividing unit 640 is configured to: determine whether a predetermined number of movements of the self-moving device in different directions cover the shaded region; and, further divide, in response to that the predetermined number of movements of the self-moving device in different directions do not cover the shaded region, the plurality of sub-working regions obtained after the division.

In an example, in the dividing apparatus 600, the dividing unit 640 is configured to divide the plurality of sub-working regions so that adjacent working regions of the plurality of sub-working regions have an overlapping portion.

In an example, the dividing apparatus 600 further includes: a working area detection unit, configured to detect a working area corresponding to a working time of a power supply of the self-moving device; and a working area determining unit, configured to determine whether an area of each of the plurality of sub-working regions is greater than the working area, where the dividing unit is configured to further divide the sub-working region in response to determining that an area of one of the plurality of sub-working regions is greater than the working area, so that an area of the working region obtained after the division is less than the working area.

In an example, the dividing apparatus 600 further includes: an obstacle detection unit, configured to detect whether an obstacle exists in the working region; and an obstacle determining unit, configured to determine whether a size of the obstacle is greater than a predetermined size threshold, where the dividing unit is configured to divide the working region based on the obstacle in response to that the size of the obstacle is greater than the predetermined size threshold.

In an example, in the dividing apparatus 600, the dividing unit 640 is configured to skip division of the working region in response to that the size of the obstacle is less than the predetermined size threshold; and the control unit is configured to control the self-moving device to move around the obstacle or turn around at the obstacle to move on.

In an example, in the dividing apparatus 600, the obstacle determining unit is configured to: detect that a state of the obstacle is moving or stationary; and detect, in response to that the state of the obstacle is stationary, whether the size of the obstacle is greater than the predetermined size threshold.

In an example, in the dividing apparatus 600, the dividing unit 640 is configured to: skip division of the working region in response to that the state of the obstacle is moving; and control the self-moving device to move around the obstacle or turn around at the obstacle to move on.

In an example, the dividing apparatus 600 further includes: a passage detection unit, configured to detect whether a passage exists in the working region, where the dividing unit 640 is configured to divide, in response to that a passage exists in the working region, the working region into a first sub-working region on one side of the passage and a second sub-working region on the other side of the passage.

In an example, the dividing apparatus 600 further includes: a vegetation detection unit, configured to detect a vegetation growth condition in the working region, where the dividing unit is configured to divide the working region based on the vegetation growth condition.

In an example, the dividing apparatus 600 further includes: a map information obtaining unit, configured to: in a process of controlling the self-moving device to move in the working region, obtain map information of a path covered by the self-moving device, where a dividing strategy update unit, configured to update a dividing strategy of the working region based on the map information.

In an example, the dividing apparatus 600 further includes: a blank region detection unit, configured to detect whether an unworked region in which the self-moving device has not performed work exists in the working region, where the dividing unit 640 is configured to divide the working region to use the unworked region as a new sub-working region.

Herein, a person skilled in the art may understand that other details of the dividing apparatus in this embodiment of the present invention are identical with corresponding details in the dividing method for a working region of a self-moving device in the embodiments of the present invention described above. Herein, details are not described again to avoid redundancy.

An embodiment of the present invention further relates to an autonomous working system, including: a self-moving device, moving and working within a working region defined on a map; and the dividing apparatus discussed above.

In the autonomous working system, the self-moving device is an autonomous lawn mower.

In the autonomous working system, the autonomous working system is an autonomous lawn mower.

An embodiment of the present invention further relates to a self-moving device, moving and working within a working region defined on a map, and including the foregoing dividing apparatus.

Compared with the prior art, the beneficial effect of the present invention is as follows: A shaded region in a working region is detected and is divided based on a boundary condition of the working region and a contour condition of the shaded region, so that it can be ensured that a self-moving device safely and efficiently covers the working region.

### Exemplary electronic device

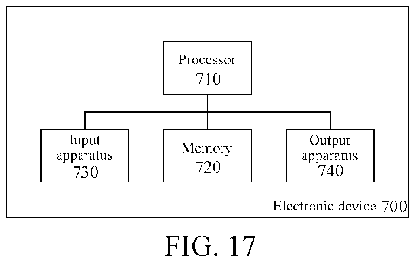

An electronic device according to an embodiment of the present invention is described below with reference to FIG. 17. The electronic device may be an electronic device integrated in a mobile station of a self-moving device or a standalone device independent of the mobile station. The standalone device may communicate with the mobile station to implement the dividing method for a working region of a self-moving device in the embodiments of the present invention.

FIG. 17 is a schematic block diagram of an electronic device according to an embodiment of the present invention.

As shown in FIG. 17, the electronic device 700 includes one or more processors 710 and a memory 720.

The processor 710 may be a central processing unit (CPU) or another form of processing unit having a data processing capability and/or an instruction execute capability, and may control other components in the electronic device 700 to perform desired functions.

The memory 720 may include one or more computer program products. The computer program product may include various forms of computer readable storage media, for example, a volatile memory and/or a non-volatile memory. The volatile memory may include, for example, a random-access memory (RAM) and/or a cache. The non-volatile memory may include, for example, a read-only memory (ROM), a hard disk, and a flash memory. The computer readable storage medium may store one or more computer program instructions. The processor 710 may execute the computer program instructions to implement the foregoing dividing method for a working region of a self-moving device in various embodiments of the present invention and/or other desired functions. The computer readable storage medium may further store a variety of content such as a boundary condition of a working region, a contour condition of a shaded region, and obstacle information.

In an example, the electronic device 700 may further include an input apparatus 730 and an output apparatus 740. These components are interconnected by using a bus system and/or another form of connection mechanism (not shown).

For example, the input apparatus 730 may be configured to receive a user input.

The output apparatus 740 may directly output various types of information or control the mobile station to send a signal.

Certainly, for simplicity, FIG. 17 shows only some of the components related to the present application in the electronic device 700, and components such as a bus, an input/output interface and the like are omitted. In addition, according to specific application, the electronic device 700 may further include any other appropriate component.

### Exemplary computer program product and computer readable storage medium

In addition to the foregoing methods and devices, an embodiment of the present application may further be a computer program product, including computer program instructions, where being executed by a processor, the computer program instructions enable the processor to perform the steps in the dividing method for a working region of a self-moving device according to various embodiments of the present invention described in the foregoing "exemplary dividing method" portion of this specification.

In the computer program product, one or any combination of a plurality of programming languages may be used to compile a program code used to perform the operations in this embodiment of the present application. The programming languages include object-oriented programming languages such as Java and C++, and further include conventional procedural programming languages such as "C" language or similar programming languages. The program code may be completely executed on a user computing device, partially executed on user equipment, executed as an independent software package, partially executed on the user computing device and partially executed on a remote computing device, or completely executed on a remote computing device or server.

In addition, an embodiment of the present application may further be a computer readable storage medium, storing computer program instructions, where when being executed by a processor, the computer program instructions enable the processor to perform the steps in the dividing method for a working region of a self-moving device according to various embodiments of the present invention described in the foregoing "exemplary method" portion of this specification.

The computer readable storage medium may use one or any combination of a plurality of readable media. The readable medium may be a readable signal medium or a readable storage medium. The readable storage medium may include, but is not limited to, an electrical, magnetic, optical, electromagnetic, infrared or semiconductor system, apparatus or device or any combination of the foregoing. A more specific example (a nonexhaustive list) of the readable storage medium includes the following: an electrical connection with one or more leads, a portable disk, a hard disk, a RAM, a ROM, an erasable programmable ROM (EPROM or a flash memory), an optical fiber, a portable compact disc ROM (CD-ROM), an optical storage device, a magnetic storage device, or any suitable combination of the foregoing.

The basic principle of the present application has been described above with reference to specific embodiments. However, it should be noted that the advantages, benefits, effects and the like mentioned in the present application are only exemplary but are not limitative. It cannot be considered that every embodiment of the present application must have these advantages, benefits, effects and the like. In addition, the specific details disclosed above are only used as examples for ease of understanding but are not limitative. The foregoing details do not limit that the present application must be implemented by using the foregoing specific details.

The block diagrams of the devices, apparatuses, equipment, and systems used in the present application are only exemplary but are not intended to require or imply identical connections, arrangements, and configurations in the manners shown in the block diagrams. For example, a person skilled in the art will conceive of that these devices, apparatuses, equipment, and systems may be connected, arranged or configured in any manner. The words such as "include", "comprise", and "have" are non-exclusive words and mean "include, but is not limited to", and these words may be used interchangeably. The words "or" and "and" used herein mean the word "and/or", and these words may be used interchangeably, unless explicitly indicated otherwise in the context. The words "for example" used herein means the words "for example, but is not limited to", and these words may be used interchangeably.

It should be further noted that in the apparatuses, devices and methods of the present application, the parts or the steps may be divided and/or recombined. These divisions and/or recombinations should be considered as equivalent solutions of the present application.

The foregoing description of the disclosed aspects enables a person skilled in the art to implement or use the present application. It is apparent to a person skilled in the art to make various changes to these aspects. The general principle defined herein is applicable to other aspects without departing from the scope of the present application. Therefore, the present application is not limited to the aspects shown herein, and instead is to meet the widest range consistent with the principles and novel features disclosed herein.

The foregoing description has been presented for illustration and description purposes. In addition, the description is not intended to limit the embodiments of the present application to the form disclosed herein. Although a plurality of example aspects and embodiments have been discussed in the foregoing, a person skilled in the art will conceive of some variations, modifications, changes, additions, and sub-combinations of the example aspects and embodiments.

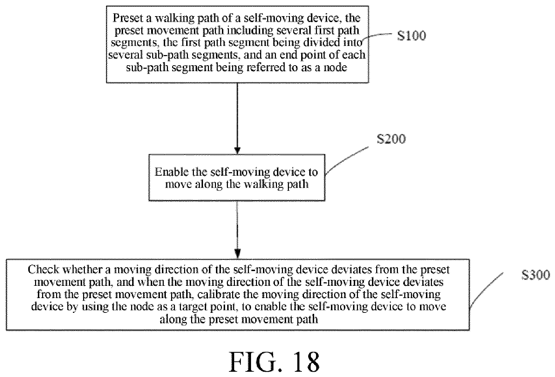

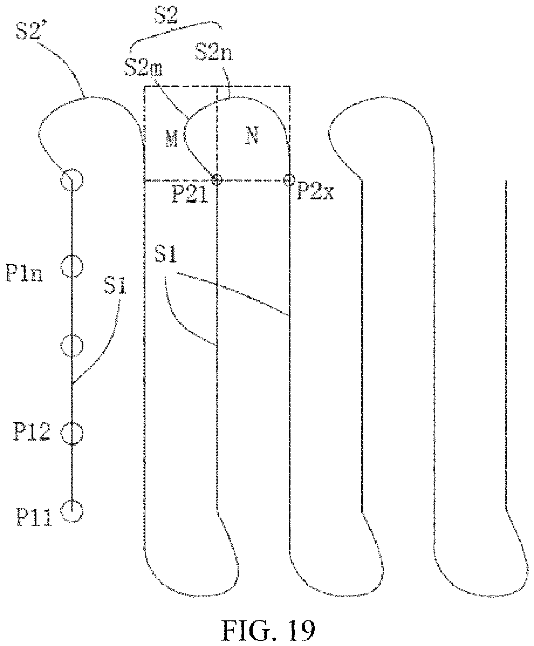

The present invention provides a moving method of a self-moving device. A self-moving device moves and works within a defined working region. In this embodiment, the self-moving device 1 is an autonomous lawn mower. In another embodiment, the self-moving device may be an autonomous leaf blower, an autonomous water sprinkler, a multifunctional machine, an autonomous vacuum cleaner or the like. Referring to FIG. 18 and FIG. 19, in the present invention, the moving method of a self-moving device includes the following steps: step S100: presetting a movement path of the self-moving device 1; step S200: enabling the self-moving device 1 to move along the walking path; and step S300: checking whether a moving direction of the self-moving device 1 deviates from the preset movement path, and when the moving direction of the self-moving device 1 deviates from the preset movement path, calibrating the moving direction of the self-moving device 1, to enable the self-moving device 1 to move along the preset movement path. Specifically, as shown in FIG. 19, in this embodiment, in step S100, the preset movement path includes several first path segments S1, the first path segment S1 is divided into several sub-path segments Ln (n is a positive integer), and an end point of the sub-path segment Ln is referred to as a node P1n (n is a positive integer). In step S300, the calibrating the moving direction of the self-moving device 1 includes: using the node P1n as a target point, and calibrating the moving direction of the self-moving device 1. Further, the self-moving device 1 arrives at the node, and a next node in the moving direction is used as the target point to determine the moving direction of the self-moving device 1. For example, when the self-moving device 1 arrives at a node P12, a next node P13 in the moving direction is used as the target point to determine the moving direction of the self-moving device 1. Specifically, when moving from the previous P12 to the next node P13, the self-moving device 1 may walk along a straight line. Specifically, in an embodiment, in step S100, several nodes may be preset to divide the first path segment into the several sub-path segments Ln. In another embodiment, in step S100, the node may be set and/or updated as the self-moving device moves along the preset movement path, to divide the first path segments into the several sub-path segments Ln.

In the present invention, the walking path including the several first path segments S1 of the self-moving device is preset, the first path segment S1 is divided into several sub-path segments Ln, an end point of each sub-path segment is used as the node P1n, and each node P1n is used as the target point to calibrate the moving direction of the self-moving device, so as to calibrate the moving direction of the self-moving device at each sub-path segment Ln, so that a smallest unit for calibrating the moving direction of the self-moving device is reduced, thereby effectively improving working precision of the self-moving device. For example, if the self-moving device walks continuously along a straight line by 20 meters, the self-moving device deviates by 34 cm, and the direction of the self-moving device deviates by only one 1 degree. Generally, the angle needs to be adjusted as soon as the self-moving device deviates by 10 cm. Therefore, it is necessary to divide a straight line segment into several segments. For example, each segment is 1 m long, and the self-moving device calculates a deviation angle every time the self-moving device moves by 1 m. In this way, the self-moving device may respond to a deviation of a position in time, thereby improving working precision of the self-moving device.

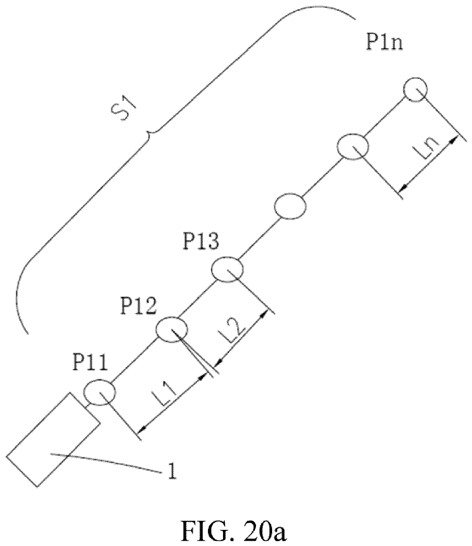

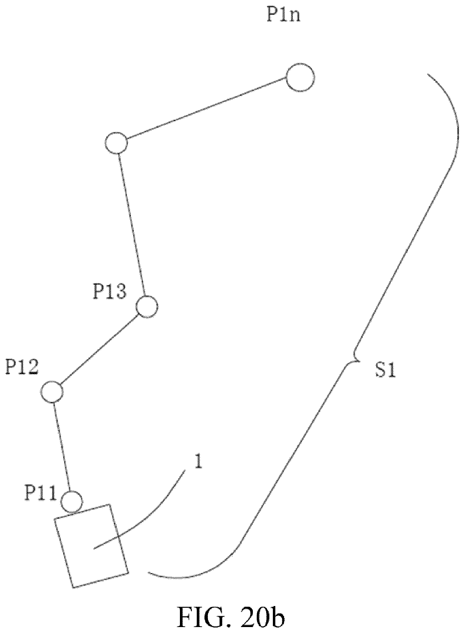

In the present invention, an extending direction of the first path segment may be a straight line direction shown in FIG. 19 and FIG. 20a. The straight line direction includes a vertical straight line direction shown in FIG. 19 or an inclined straight line direction shown in FIG. 20a. Alternatively, the extending direction may be a non-straight line direction shown in FIG. 20b. The non-straight line direction includes a polygonal line segment direction, an arc direction, an irregular direction or the like. However, general directions of the first path segments are consistent. For example, as shown in FIG. 19, FIG. 20a, and FIG. 20b, the self-moving device 1 keeps moving in an upward direction. That is, general moving directions of the self-moving device 1 along the first path segments are consistent. Specifically, in an embodiment, as shown in FIG. 19 and FIG. 20a, the first path segment S1 may include a straight line segment. In another embodiment, as shown in FIG. 20b, the first path segment S1 may include a polygonal line segments, and the node Pin includes a turning point of the polygonal line segment.

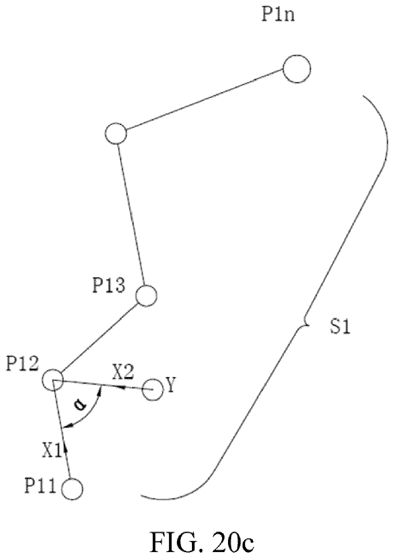

Specifically, the following two manners are used to check whether the moving direction of the self-moving device 1 deviates from the preset movement path. First manner: In step S300, the checking whether a moving direction of the self-moving device deviates from the preset movement path includes: providing an angle sensor, for example, a gyroscope, where the angle sensor outputs an angle parameter of a movement of the self-moving device, and determines, according to the angle parameter, whether a current moving direction of the self-moving device is consistent with a preset moving direction, so as to determine whether the moving direction of the self-moving device deviates from the preset movement path. Second manner: As shown in FIG. 20c, in step S300, the checking whether the moving direction of the self-moving device 1 deviates from the preset movement path includes: providing a positioning device, outputting a current position Y of the self-moving device 1, calculating a deviation angle α of the self-moving device according to a direction X2 from the current position Y of the self-moving device to a target position P12 and a direction X1 of the preset movement path P, and determining, according to whether the deviation angle α is greater than a preset threshold, whether the moving direction of the self-moving device 1 deviates from the preset movement path. Specifically, when the second manner is used to check the moving direction of the self-moving device 1, the deviation angle of the self-moving device may be calculated at an interval of a preset time, and it may be determined, according to whether the deviation angle is greater than the preset threshold, whether the moving direction of the self-moving device deviates from the preset movement path.

Specifically, if the self-moving device 1 has a small deviation, the first manner is preferably used to check whether the moving direction of the self-moving device 1 deviates from the preset movement path, and the direction of the self-moving device 1 is calibrated. When the self-moving device 1 has a large deviation, the second manner is preferably used to check whether the moving direction of the self-moving device 1 deviates from the preset movement path, so as to enable the self-moving device 1 to deflect in a direction towards the preset path.

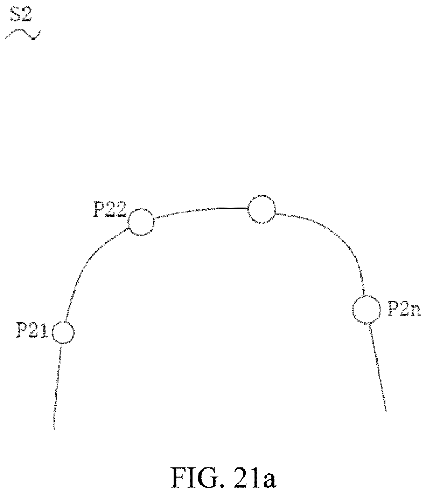

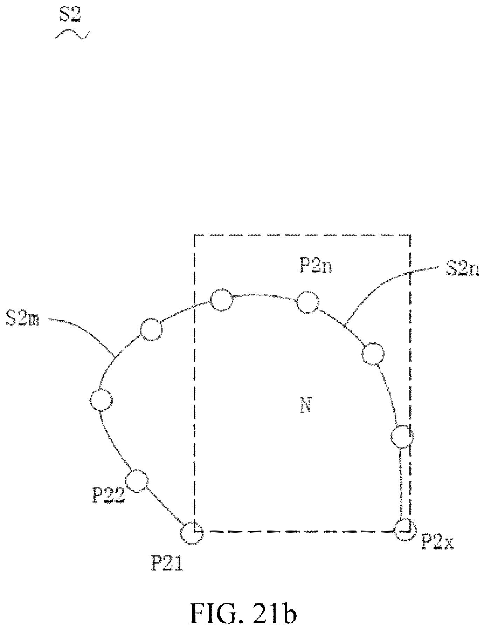

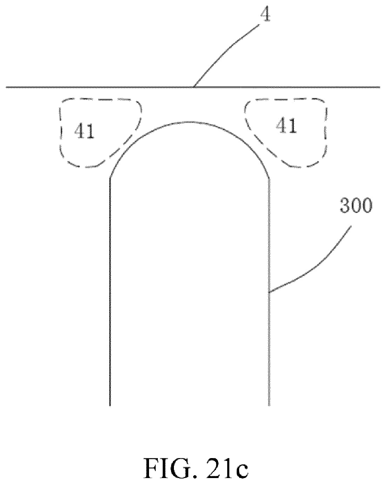

In a specific embodiment, as shown in FIG. 19, in step S100, the preset movement path further includes a second path segment S2, the second path segment S2 connects a movement path of the self-moving device 1 before steering and a movement path of the self-moving device 1 after steering, and the self-moving device 1 steers along the second path segment S2. In this embodiment, the second path segments S2 connect two adjacent first path segments S1 extend in opposite directions, to enable the self-moving device 1 to steer along the second path segment S2. The second path segment S2 is located near an edge position of a working region of the self-moving device 1. To be specific, the self-moving device 1 moves along the second path segment S2 at the edge position of the working region. FIG. 21a and FIG. 21b are enlarged views of the second path segment S2. Several nodes P2n are set in the second path segment S2. The self-moving device 1 sequentially uses the several nodes P2n on the second path segments S2 as the target point to move along the second path segment S2. Specifically, in an embodiment, as shown in FIG. 21a, the second path segment S2 includes an arc segment. To be specific, when approaching the edge position of the working region, the self-moving device 1 moves along the arc-shaped second path segment S2. Referring to FIG. 21c, a conventional autonomous lawn mower usually makes a U turn. As a result, during working, the lawn mower may fail to completely cover a region 41 near an edge 4. In the embodiments of the present invention, an autonomous lawn mower makes an arc turn when approaching an edge of the working region and moves along the arc-shaped second path segment S2. A right angle is adjusted to be a plurality of coverage points P2n, so that a coverage ratio for an edge of the working region can be improved, thereby improving a working effect.

In another embodiment, as shown in FIG. 21b, the second path segment S2 includes an irregular path segment. A region between the movement path before steering and the movement path after steering is referred to as a middle region N. The irregular path segment includes a middle segment S2n located inside the middle region N and an extended segment S2m located outside the middle region N. Specifically, in this embodiment, the second path segment S2 includes a starting point P21 and an end point P2x. The extended segment S2m is a path segment beyond a region between the starting point P21 and the end point P2x of the second path segment. The second path segment S2 is located near the edge position of the working region of the self-moving device 1. To be specific, the self-moving device 1 moves along the second path segment S2 at the edge position of the working region. When moving along the extended segment S2m of the second path segment S2, the self-moving device 1 at least partially covers an edge region that is not covered when the self-moving device 1 moves along an adjacent second path segment. For example, as shown in FIG. 19, when moving along the extended segment S2m of the second path segment S2, the self-moving device 1 at least partially covers an edge region M that is not covered when the self-moving device 1 moves along an adjacent second path segment S2', so that as the self-moving device 1 moves along a next second path segment S2, an uncut region from a previous second path segment S2' is filled, thereby leaving as few as possible uncut regions in an entire cutting process and improving a coverage ratio for an edge of the working region.

In an optimal embodiment, as shown in FIG. 19, the preset movement path includes parallel reciprocating paths, the first path segment S1 is a parallel path, and the second path segment S2 connects parallel paths among the parallel reciprocating paths. Certainly, in other embodiments, the preset movement path is not limited to parallel reciprocating paths, and further includes non-parallel reciprocating paths. For example, the first path segment S1 shown in FIG. 20b is a non-straight line path, several first path segments S1 constitute several irregular reciprocating paths, and the second path segments S2 connect the irregular reciprocating paths. Certainly, when the first path segment S1 is a straight line path, the several first path segments S1 may constitute several non-parallel reciprocating paths, and the second path segments S2 connect the non-parallel reciprocating paths.

The present invention further provides a storage medium, storing computer instructions, where when the computer instructions are invoked, the foregoing moving method of a self-moving device 1 is performed.

The present invention further provides a server, including a memory and a processor, where the memory stores computer readable instructions, and the processor invokes the computer readable instructions and performs the foregoing moving method of a self-moving device 1.

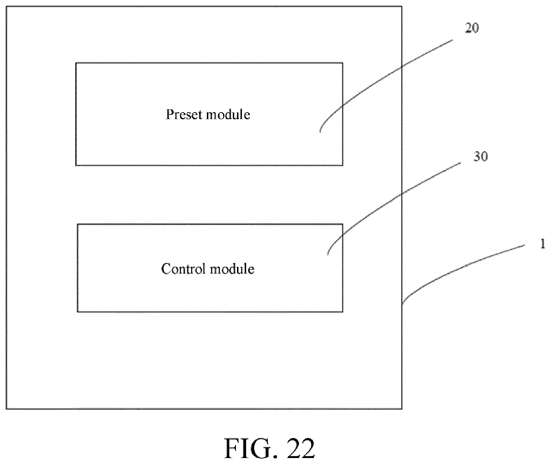

The present invention further provides a self-moving device 1. The self-moving device 1 moves and works within a defined working region. As shown in FIG. 22, the self-moving device 1 includes a preset module 20 and a control module 30. As shown in FIG. 22, and referring to FIG. 18 and FIG. 19, the preset module 20 is configured to preset a preset movement path of the self-moving device 1, the preset movement path including several first path segments S1, the first path segment S1 being divided into several sub-path segments Ln, and an end point of the sub-path segment Ln being referred to as a node P1n. Specifically, the preset module 20 is further configured to preset the node, to divide the first path segments S1 into the several sub-path segments Ln. The control module 30 is configured to: enable the self-moving device 1 to move along the preset movement path, check whether a moving direction of the self-moving device 1 deviates from the preset movement path, and when the moving direction of the self-moving device 1 deviates from the preset movement path, use the node Pin as a target point to calibrate the moving direction of the self-moving device, to enable the self-moving device 1 to move along the preset movement path.

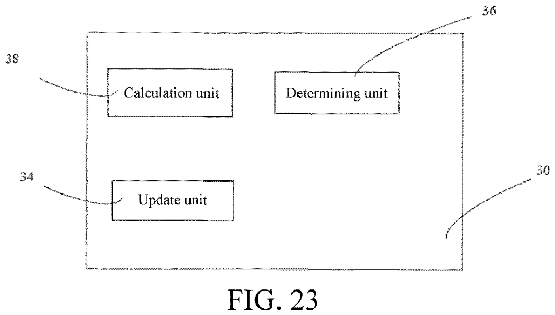

As shown in FIG. 23, in a specific embodiment, the control module 30 includes an angle sensor, for example, a gyroscope. The angle sensor outputs an angle parameter of a movement of the self-moving device. The control module 30 determines, according to the angle parameter, whether a current moving direction of the self-moving device 1 is consistent with a preset moving direction, so as to determine whether the moving direction of the self-moving device 1 deviates from the preset movement path. The control module 30 further includes a calculation unit 38 and a determining unit 36. The calculation unit 38 is configured to calculate a deviation angle of the self-moving device 1 according to a direction from a current position of the self-moving device 1 to a target position and a direction of the preset movement path. The determining unit 36 is configured to determine, according to whether the deviation angle is greater than the preset threshold, whether the moving direction of the self-moving device 1 deviates from the preset movement path. Specifically, the calculation unit 38 is configured to calculate the deviation angle of the self-moving device 1 at an interval of a preset time, and the determining unit 36 is configured to determine, according to whether the deviation angle is greater than the preset threshold, whether the moving direction of the self-moving device 1 deviates from the preset movement path. The control module 30 further includes an update unit 34. The update unit 34 is configured to set and/or update the node as the self-moving device 1 moves along the preset movement path. When the self-moving device 1 arrives at the node P1n, the control module 30 further uses a next node in the moving direction as the target point to determine the moving direction of the self-moving device 1.

The following clearly and completely describes the technical solutions in the embodiments of the present invention with reference to the accompanying drawings in the embodiments of the present invention. Apparently, the described embodiments are merely some of the embodiments of the present invention rather than all of the embodiments. All other embodiments obtained by a person of ordinary skill in the art based on the embodiments of the present invention without creative efforts shall fall within the protection scope of the present invention.

An autonomous working system such as an autonomous lawn mower system can autonomously complete a lawn maintenance task or the like, and becomes increasingly popular among consumers. In the autonomous working system, a self-moving device such as an autonomous lawn mower is restricted to move inside a working region. When the autonomous lawn mower leaves the working region, a safety problem may occur. In addition, an obstacle may exist in the working region. The obstacle includes a pit, a flowering shrub, and the like. The autonomous lawn mower should avoid the obstacle in the working region during working to prevent accidents such as falling or trapping. To ensure the safety of the autonomous working system and improve the working efficiency of the autonomous lawn mower, the autonomous lawn mower needs to recognize the working region. The recognizing the working region includes recognizing a boundary of the working region and the obstacle in the working region.

In a method used by a conventional autonomous lawn mower to recognize a working region, a boundary line is arranged along a boundary of the working region, and a boundary line may be arranged along a periphery of an obstacle. A boundary line transmits an electrical signal to generate an electromagnetic field. A sensor on the autonomous lawn mower detects an electromagnetic field signal to determine whether the autonomous lawn mower is located inside or outside a region defined by a boundary line.

Such a method requires complex arrangement of a boundary line and adversely affects the look of a lawn.

To enable an autonomous lawn mower to recognize a working region without arranging a boundary line, a method for creating a map of a working region may be used. In the method for creating a map of a working region, position coordinates of a boundary, an obstacle, and the like of a working region are recorded, a coordinate system is established, and a map of the working region is generated. When an autonomous working system works, a position of the autonomous lawn mower on the map is observed to determine whether the autonomous lawn mower is inside a safe working region.

An autonomous working system using this method needs to have a navigation function to enable an autonomous lawn mower to accurately acquire the position of the autonomous lawn mower during working. One method for implementing high precision navigation is to use a DGPS module to implement navigation. The DGPS module includes a base station and a mobile station. Therefore, another technical problem in using this method is how to enable the base station and the mobile station to reliably and efficiently provide navigation data to the autonomous working system.

Some regions with weak satellite navigation signals may exist in a working region. When a lawn mower moves in these regions, navigation precision may be affected, and a navigation effect of the lawn mower is affected accordingly.

To prevent navigation precision of the lawn mower from decreasing during working in a shaded region, for example, an inertial navigation system may be used to help with the navigation precision of the machine. However, as time elapses, errors in inertial navigation accumulate. To eliminate an accumulated error of the inertial navigation system and improve positioning precision of the self-moving device, the accumulated error in inertial navigation may be corrected by using positioning coordinates from a satellite navigation system after the inertial navigation system has worked for a period of time, thereby ensuring navigation precision of the self-moving device in the shaded region.

In addition, duration during which the machine remains in the shaded region to work may further be shortened to reduce a navigation error. In one aspect, if the machine works for a short time in the shaded region, duration during which satellite navigation signals are weak is shortened, so that duration during which the machine can be accurately located is extended. In another aspect, because the machine works for a short time in the shaded region, the accumulated error in inertial navigation is further reduced. In addition, satellite navigation may further frequently correct the errors in inertial navigation. Therefore, working precision of the machine in the working region can be greatly improved.

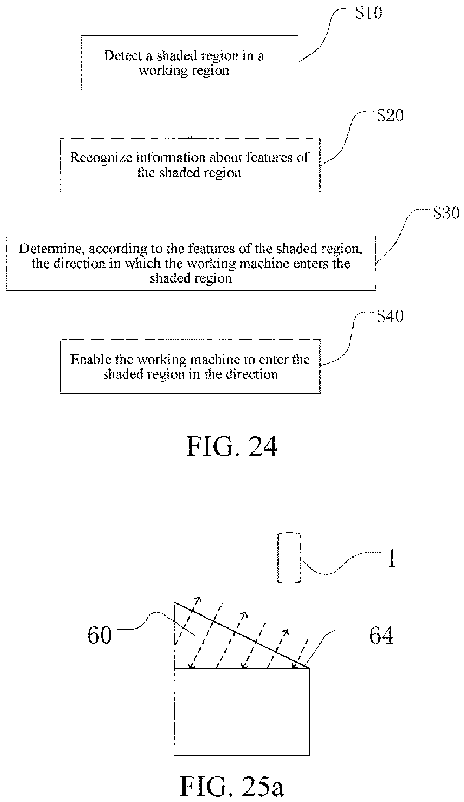

Specifically, the present invention provides a working method of a self-moving device. Referring to FIG. 24, the method includes: S10. obtaining a shaded region in a working region; S20. recognizing information about features of the shaded region; S30. determining, according to the features of the shaded region, a direction in which a self-moving device enters the shaded region; and S40. enabling the self-moving device to enter the shaded region in the direction. In the working method provided in the present invention, an entry direction into the shaded region is selected according to the features of the shaded region, so that duration during which a machine remains in the shaded region can be reduced, thereby improving navigation positioning precision of the machine; or, to ensure positioning precision, the machine goes deeper into the shaded region and covers more shaded regions when duration during which the machine remains in the shaded region is limited.

In an embodiment, the recognizing information about features of the shaded region includes: recognizing a geometric feature of the shaded region, so that a longitudinal axis may be defined after the geometric shape of the shaded region is obtained.

In some embodiments, the shaded region has an approximately regular shape, for example, an approximately rectangular shape. In this case, the longitudinal axis is parallel to a long side direction of the rectangle. Alternatively, the shaded region has an approximately elliptical shape. In this case, the longitudinal axis is a major axis of an ellipse. In some embodiments, the shaded region has an irregular shape. In this case, a mathematical method known in the industry may be used to approximate the irregular shape into a regular shape for processing. Alternatively, another method may be used to determine the longitudinal axis of the shaded region. Subsequent steps are then performed based on the determined longitudinal axis.

In this embodiment, the entry direction may be a direction approximately perpendicular to the longitudinal axis of the shaded region.

Alternatively, it is defined that the shaded region includes a first edge located on a side of the longitudinal axis of the shaded region, and the entry direction is an approximately normal direction of the first edge.

Alternatively, it is defined that the shaded region includes a first edge and a second edge that are respectively located on two sides of the longitudinal axis of the shaded region, and the entry direction is a direction in which a distance between the first edge and the second edge is the shortest.

Alternatively, it is defined that the shaded region includes a first edge near an obstacle and a second edge far away from the obstacle, and the entry direction includes an approximately normal direction in the first edge or the second edge, or the entry direction is a direction in which a distance between the first edge and the second edge is the shortest.

The self-moving device travels in the direction approximately perpendicular to the longitudinal axis of the shaded region, or an approximately normal direction in the first edge or the second edge, or a direction in which a distance between the first edge and the second edge is the shortest. Therefore, it may be understood that a travel distance in the shaded region in the direction is shorter than those in other directions, so that an accumulated error is relatively small, and positioning is more accurate.

The approximately perpendicular/approximately normal direction should be construed relatively flexibly. In an embodiment, the direction is between the vertical direction/normal direction minus 30° and the vertical direction/normal direction plus 30°. In another optional embodiment, the direction is between the vertical direction/normal direction minus 20° and the vertical direction/normal direction plus 20°, the vertical direction/normal direction minus 15° and the vertical direction/normal direction plus 15°, the vertical direction/normal direction minus 10° and the vertical direction/normal direction plus 10°, the vertical direction/normal direction minus 5° and the vertical direction/normal direction plus 5° or the vertical direction/normal direction minus 3° and the vertical direction/normal direction plus 3°.

Referring to FIG. 25a, the longitudinal axis is the hypotenuse 64 of a triangular shaded region 60. The lawn mower 1 may enter, in a direction approximately perpendicular to the hypotenuse 64, the shaded region 60 formed by an obstacle 50 to cut grass, and steer when meeting an edge of the shaded region 60, so that the lawn mower 1 exits the shaded region 60 in a direction opposite to the entry direction. The approximately perpendicular direction includes a direction that deviates from a direction perpendicular to the hypotenuse 64 by an angle to the left or right.

During a grass cutting operation of the lawn mower 1, the lawn mower 1 may enter, in the foregoing direction (the direction shown by an arrow in the figure), the shaded region 60 formed by the obstacle 50 to cut grass, and may exit the shaded region 60 in a direction shown by the arrow after cutting grass. After repeated entries and exits, a grass cutting task in the shaded region 60 may be completed. The foregoing principle of selecting a direction may enable the lawn mower 1 to remain in the shaded region 60 for a time as short as possible, thereby preventing weak satellite navigation signals from affecting positioning precision of the lawn mower 1. It should be noted that the lawn mower 1 may enter the shaded region 60 in a same direction or different directions. For example, the direction in which the lawn mower enters the shaded region 60 may be determined according to the geometric features of the shaded region 60. However, during grass cutting work, preferably, the lawn mower 1 may keep entering the same shaded region 60 in a same direction to prevent a user from having an impression that the lawn mower 1 works in disorderly fashion, thereby improving user experience.

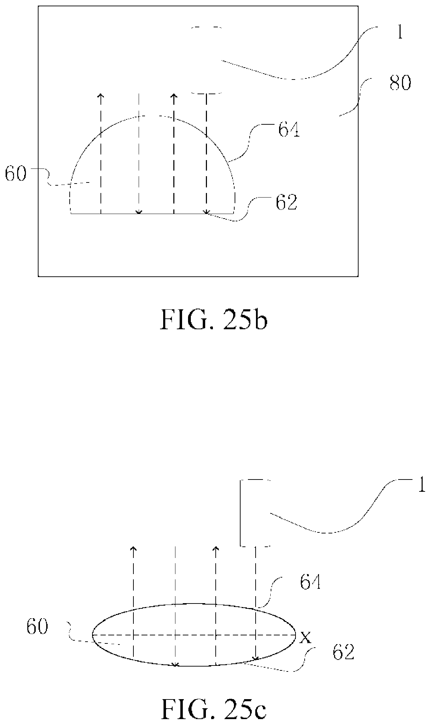

Referring to FIG. 25c, according to a longitudinal axis X of the shaded region 60, an edge of the shaded region 60 may be divided into a first edge 62 and a second edge 64 that are respectively located on two sides of the longitudinal axis. In this case, the shaded region 60 is formed by the first edge 62 and the second edge 64. The lawn mower 1 may enter the shaded region 60 in a direction approximately perpendicular to the longitudinal axis X or in an approximately normal direction of the first edge 62 or the second edge 64. It may be understood that the direction is also a direction in which a distance between the first edge and the second edge is the shortest.

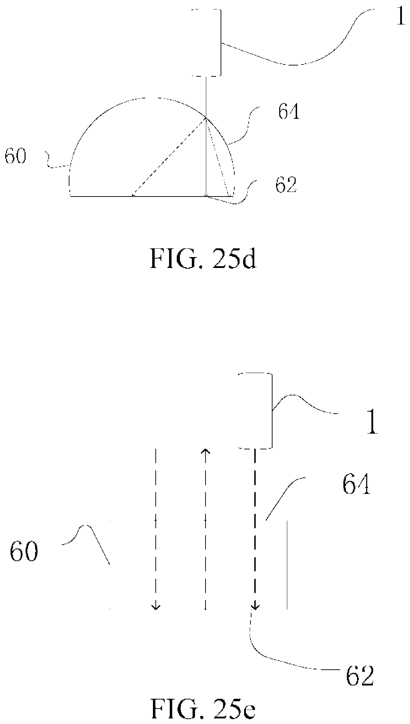

Referring to FIG. 25d, the lawn mower 1 may enter the shaded region 60 in a direction in which a distance between the first edge 62 and the second edge 64 is the shortest. The lawn mower 1 may select any direction to enter the shaded region 60. Compared with other directions, a path from the second edge 64 to the first edge 62 is the shortest in a direction indicated by a solid line arrow. Herein, the shortest distance is not limited to an absolute shortest distance, but instead is an optimal path from the second edge 64 to the first edge 62. It may be understood that the shortest distance may also be understood as a smallest average value of movement distances of the lawn mower 1 from the first edge 62 to the second edge 64 and movement distances of the lawn mower 1 from the second edge 64 to the first edge 62 when the lawn mower 1 uses paths parallel to the entry direction to complete cutting in the shaded region 60.

It should be noted that the shaded region in this embodiment is determined according to the strength of a DGPS signal received by the self-moving device/mobile station. Specifically, a quality threshold of a received DGPS signal may be preset. When a quality parameter of a DGPS signal received by the self-moving device does not satisfy a preset DGPS signal quality threshold, it is considered that the region is the shaded region.

The DGPS technology may be a real-time kinematic (RTK) technology, that is, a carrier-phase differential technology. For example, the mobile station may perform computation by using a carrier-phase algorithm. The DGPS technology may be alternatively a continuously operating satellite reference station (CORS) technology.

Continue to refer to FIG. 25a and FIG. 25b. Generally, the shaded region 60 in the working region is caused by the presence of a building or another obstacle, and consequently regions with weakened signals are formed on one or more sides of the building or obstacle. For example, the shape of the shaded region 60 may be a shape extending outward from a lower edge of the building or obstacle. In this case, the first edge 62 may be an intersecting line between the building or obstacle and the working region, and the second edge 64 may be formed by connecting points that are located near the building or the obstacle and from which the quality parameter of the DGPS signal starts to satisfy a preset threshold (the principle of the preset threshold is, for example, whether the strength of a satellite navigation signal can support precise navigation). The first edge 62 and the second edge 64 may form a closed shape. For example, the first edge and the second edge may form a semicircular closed structure shown in FIG. 25b. During working of the machine, to enable the machine to remain in the shaded region for a shortest time, for example, the machine may enter the shaded region in an approximately normal direction of the first edge 62 or the second edge 64 or in a direction (the directions shown by the arrows in FIG. 25a and FIG. 25b) in which the distance between the first edge 62 and the second edge 64 is the shortest.

The walking path of the self-moving device may be set by a program. The program may simulate various walking manners of the self-moving device, and determine the length of a path through the shaded region in a walking manner, so as to select a walking manner in which the self-moving device has a shortest walking path in the shaded region. Preferably, walking directions of the self-moving device in a region may be consistent and continuous. To be specific, a direction is not adjusted according to minor changes in a shape of a boundary, so as to prevent the user from having an impression that the self-moving device is "unintelligent".

In an embodiment of the present invention, the method may further include: presetting a quality threshold of a DGPS signal in the self-moving device; and the detecting a shaded region in a working region includes: the self-moving device determines, according to that an obtained DGPS signal does not satisfy a quality requirement, that the self-moving device is located in the shaded region.

In an embodiment, the method may further include: presetting a quality threshold of a DGPS signal in the self-moving device, and the detecting a shaded region in a working region S10 further includes: loading a map of the working region; and marking an initial shaded region on the map, updating the initial shaded region according to that a DGPS signal detected by the self-moving device does not satisfy the quality threshold, and using the updated shaded region as the shaded region. Specifically, the shaded region may be determined by comparing the strength of the detected DGPS signal with a preset quality threshold. For example, the threshold may be determined according to the principle that whether a satellite navigation signal can support precise positioning. For example, when the machine can be precisely located, even if a DGPS signal is somewhat weakened, it is still not necessary to determine the region as a shaded region. Generally, for example, a region with navigation signals weakened by blockage of a building or an obstacle may be partially marked as a shaded region, so as to prevent inappropriate division of a shaded region from increasing the work load of the machine.

In an embodiment, the method further includes: presetting a quality threshold of a DGPS signal in the self-moving device. The enabling the self-moving device to enter the shaded region in the foregoing direction includes: when the DGPS signal obtained by the self-moving device does not satisfy the quality threshold, enabling, by the self-moving device, an inertial navigation signal. When the DGPS signal obtained by the self-moving device satisfies the quality threshold, the satellite navigation signal is regained. In this embodiment of the present invention, switching between an inertial navigation signal and a satellite navigation signal is implemented according to the strength of signals, so that accurate positioning of the machine can be ensured.

In an embodiment, for example, the enabling the self-moving device to enter the shaded region in the foregoing direction includes: enabling both satellite navigation and inertial navigation; and using a weighted value of a satellite navigation result and an inertial navigation result as a navigation result. As discussed above, an error in inertial navigation gradually increases as time elapses, resulting in decreasing navigation precision. In this embodiment of the present invention, inertial navigation and satellite navigation are combined in a complementary manner to locate a machine in the shaded region more precisely.

In this embodiment, a first weight for the satellite navigation result and a second weight for the inertial navigation result may further be dynamically adjusted according to a change in the strength of a DGPS signal. The first weight is decreased and the second weight is increased when the DGPS signal weakens. The first weight is increased and the second weight is decreased when the DGPS signal improves. To be specific, weights of the inertial navigation signal and the satellite navigation signal may be determined according to the strength of the DGPS signal. In extreme cases, that is, when the satellite navigation signal is very strong, the weight of the inertial navigation signal may be zero. In other words, the satellite navigation signal alone is used as a basis for navigation positioning. Similarly, when the satellite navigation signal is very weak, the weight of the satellite navigation signal may be zero. In other words, the inertial navigation signal alone is used as a basis for navigation positioning. A person skilled in the art may know that the weight of the satellite navigation signal and the weight of the inertial navigation signal may be separately functions of signal strength. Further, the first weight and the second weight may be functions of a distance by which the self-moving device enters the shaded region.

After the self-moving device exits the shaded region in an exit direction opposite the entry direction, the method may further include: correcting an inertial navigation signal by using a DGPS signal. Specifically, each time after the machine exits the shaded region, the inertial navigation signal may be corrected by using the satellite navigation signal, so as to ensure navigation precision of inertial navigation after the machine enters the shaded region.

In another embodiment, another positioning device may be used in place of the foregoing satellite positioning device, is referred to as a first positioning device, and outputs a first positioning signal. The first positioning device may be alternatively a UWB positioning device, an ultrasonic beacon positioning device or the like.

In another embodiment, another positioning device may be used in place of the foregoing inertial navigation device, is referred to as a second positioning device, and outputs a second positioning signal. The second positioning device may be alternatively an image acquisition device, a capacitive lawn detection device or the like.

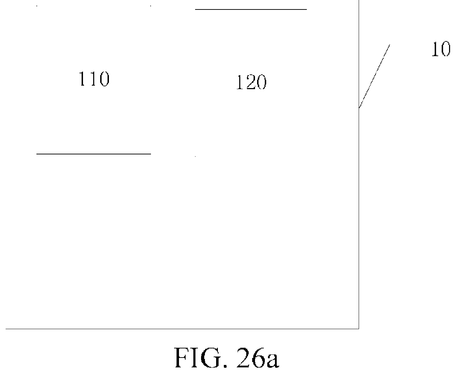

Another aspect of the present invention provides a self-moving device. Referring to FIG. 26a, the machine 10 includes a detection module 110 and a control module 120. The detection module 110 is configured to obtain a shaded region in a working region. The control module 120 is configured to: recognize information about a features of the shaded region, where the features include a geometric feature of the shaded region; determine, according to the geometric feature of the shaded regions, a direction in which the self-moving device enters the shaded region; and enable the self-moving device to enter the shaded region in an entry direction. For the machine provided in the present invention, the shaded region is marked in a working region, and a direction in which a machine enters the shaded region is selected according to the features of the shaded region, so that duration during which the machine remains in the shaded region can be reduced, thereby improving positioning precision.

In this embodiment, the entry direction may be a direction approximately perpendicular to a longitudinal axis of the shaded region.

Alternatively, it is defined that the shaded region includes a first edge located on a side of the longitudinal axis of the shaded region, and the entry direction is an approximately normal direction of the first edge.

Alternatively, it is defined that the shaded region includes a first edge and a second edge that are respectively located on two sides of the longitudinal axis of the shaded region, and the entry direction is a direction in which a distance between the first edge and the second edge is the shortest.

Alternatively, it is defined that the shaded region includes a first edge near an obstacle and a second edge far away from the obstacle, and the entry direction includes an approximately normal direction in the first edge or the second edge, or the entry direction is a direction in which a distance between the first edge and the second edge is the shortest.

The self-moving device travels in the direction approximately perpendicular to the longitudinal axis of the shaded region, or an approximately normal direction in the first edge or the second edge, or a direction in which a distance between the first edge and the second edge is the shortest. Therefore, it may be understood that a travel distance in the shaded region in the direction is shorter than those in other directions, so that an accumulated error is relatively small, and positioning is more accurate.

The approximately perpendicular/approximately normal direction should be construed relatively flexibly. In an embodiment, the direction is between the vertical direction/normal direction minus 30° and the vertical direction/normal direction plus 30°. In another optional embodiment, the direction is between the vertical direction/normal direction minus 20° and the vertical direction/normal direction plus 20°, the vertical direction/normal direction minus 15° and the vertical direction/normal direction plus 15°, the vertical direction/normal direction minus 10° and the vertical direction/normal direction plus 10°, the vertical direction/normal direction minus 5° and the vertical direction/normal direction plus 5° or the vertical direction/normal direction minus 3° and the vertical direction/normal direction plus 3°.

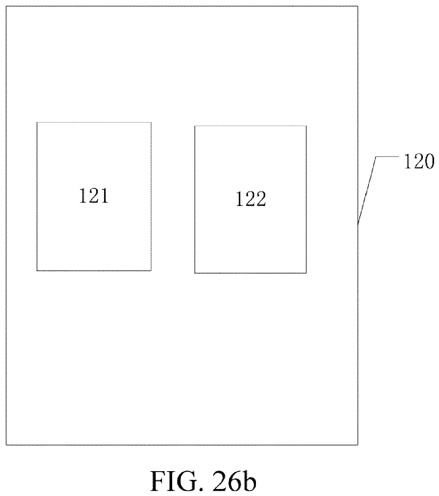

Referring to FIG. 26b, in an embodiment, the control module 120 includes a recognition unit 121 and an enable unit 122. The recognition unit 121 is configured to recognize a geometric shape of the shaded region. The enable unit 122 is configured to enable the self-moving device to enter the shaded region in the direction approximately perpendicular to the longitudinal axis of the shaded region or an approximately normal direction in the first edge or the second edge or a direction in which a distance between the first edge and the second edge of the shaded region is the shortest.

The detection module may obtain the shaded region. For example, the strength of a satellite navigation signal is detected to determine the shaded region. Specifically, a quality threshold for a received DGPS signal may be set in the control module, and the machine is enabled to walk near, for example, a building (or a DGPS mobile station is manually detached and carried to move near positions at which signal strength is close to the quality threshold, points at which the signal strength does not satisfy the quality threshold are recorded, and these points are subsequently connected to obtain a shape of the shaded region). Therefore, points at which a quality parameter of the DGPS signal is less than or equal to a preset DGPS signal quality threshold are marked on the map, and after sufficient feature signal points are chosen, these points in a boundary may be connected to obtain the shaded region.

Alternatively, when moving in the working region, a robot determines, according to strength of a satellite positioning signal received by the robot, whether the robot is currently in the shaded region, so as to make marks on a map of the working region to update the shaded region.

In this embodiment, for example, the control module 120 may control, by combining a current position and attitude information of the machine and shape and position information of the shaded region, the machine to adjust an attitude when the machine arrives at an outer edge of the shaded region, to enable the machine to enter the shaded region in a specific direction. Alternatively, a general walking direction of the machine in the region is adjusted according to the shape of the shaded region in the region, to make the walking of the machine continuous.

Referring to FIG. 25a, for example, when the shaded region is a right-angled triangle, the entry direction into the shaded region may be a direction perpendicular to the hypotenuse. Referring to FIG. 25b, for example, when the shaded region is a semicircle or an approximate semicircle, the entry direction into the shaded region may be a direction perpendicular to the diameter of the semicircular. Referring to FIG. 25e, for example, when the shape of the shaded region 60 is a rectangle, the entry direction may be a direction perpendicular to the long side of the rectangle. The shape of the shaded region is not limited to the foregoing shapes, and may be any another shape.

In an embodiment, the detection module further includes a loading unit 111, a marking unit 112, and an update unit 113. The loading unit 111 is configured to load a map of the working region. The marking unit 112 is configured to mark an initial shaded region on the map. The update unit 113 updates the initial shaded region according to a relationship between the quality parameter of the DGPS signal detected by the self-moving device and the preset DGPS signal quality threshold. In this embodiment, the loading unit 111 may first load the map of the working region, and initially mark a possible shaded region. For example, initial marks may be approximately determined by combining a building, an obstacle, and the like in the working region. Next, the machine may be enabled to travel in each initially marked shaded region, and signal feature points are further marked according to a relationship between navigation signal strength at each point and the preset DGPS signal quality threshold. As discussed above, these signal points may be connected to recognize a shaded region. The update unit may replace the initially marked shaded region with an actually measured shaded region.

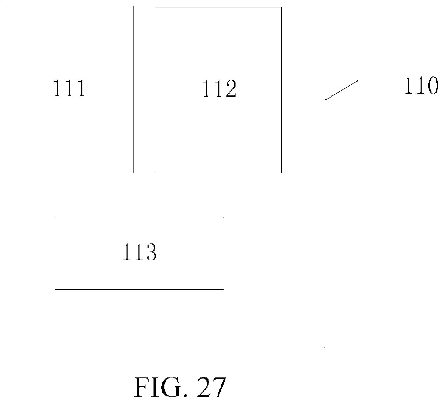

Referring to FIG. 27, in an embodiment, for example, the detection module 110 further includes a preset unit 114 and an obtaining unit 115. For example, the preset unit 114 is configured to preset a quality threshold of a received DGPS signal. The obtaining unit 115 obtains a quality parameter of the DGPS signal. The detection module is configured to recognize the shaded region according to a relationship between the obtained quality parameter of the DGPS signal and the quality threshold. When the obtained quality parameter of the DGPS signal does not satisfy the quality threshold, it is determined that the self-moving device is located in the shaded region. During an actual operation, as discussed above, the detection module may detect, in the initial shaded region, feature points whose signal strength does not satisfy the quality threshold, and connect these feature points to obtain the shape of the shaded region. The machine provided in this embodiment of the present invention can rapidly recognize the shaded region, so as to provide a desirable basis for the machine to select a direction to enter the shaded region.

In an embodiment, the control module 120 further includes a switching unit. The switching unit is configured to: switch to an inertial navigation signal when the quality parameter of the DGPS signal obtained by the self-moving device does not satisfy the preset DGPS signal quality threshold; and switch to a satellite navigation signal when the quality parameter of the DGPS signal satisfies the preset DGPS signal quality threshold. That is, the control module 120 of the machine may have an autonomous switching mechanism. When the detection module 110 detects that the satellite navigation signal is weak, the switching unit autonomously switches to the inertial navigation signal, so as to prevent positioning precision of the self-moving device from decreasing. As discussed above, because errors keep accumulating as the inertial navigation signal has been used for a long time, the inertial navigation signal may be used as a supplement to the satellite navigation signal. When it is detected that the quality parameter of the DGPS signal is restored to satisfy the preset DGPS signal quality threshold, the switching unit 123 may switch from the inertial navigation signal to the DGPS signal in time, thereby preventing decreased positioning precision caused by the inertial navigation signal.

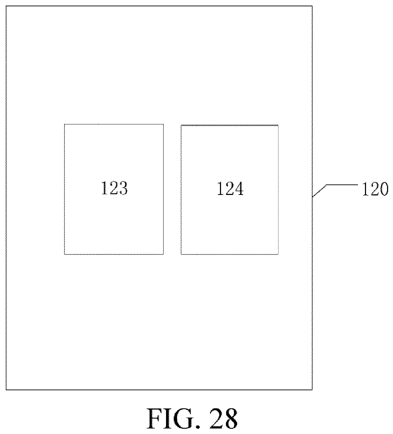

Referring to FIG. 28, in this embodiment, for example, the control module may further include a timing unit 123 and a correction unit 124. The timing unit 123 may be configured to measure duration during which an inertial navigation signal is separately used (that is, duration during which the machine is in the shaded region). After the duration exceeds a length, when the machine regains the satellite navigation signal, the correction unit 124 performs error correction on inertial navigation in time. For example, the satellite navigation signal may be used to perform correction on inertial navigation each time after inertial navigation is used and the satellite navigation signal is regained, thereby improving navigation positioning precision of the machine.

In an embodiment, the control module may further include a calculation unit 125. Both the satellite navigation and the inertial navigation are enabled. The calculation unit 125 is configured to: perform weighting processing on a satellite navigation result and an inertial navigation result, and use a result after weighting processing as a navigation result.

Further, the calculation unit 125 is further configured to dynamically adjust a first weight for the satellite navigation result and a second weight for the inertial navigation result. For example, the calculation unit 125 decreases the first weight and increases the second weight when the DGPS signal weakens, and the calculation unit 125 increases the first weight and decreases the second weight when the DGPS signal improves. For example, the first weight and the second weight may be separately functions of navigation signal strength. Because navigation signal strength is associated with a distance by which the machine enters the shaded region, the first weight and the second weight may also separately be functions of the distance by which the machine enters the shaded region. For details, refer to the content in the method part.

Still another aspect of the present invention provides a memory, storing computer readable instructions, where when the computer readable instructions are invoked, the foregoing method is performed.

Yet another aspect of the present invention provides a server, including a processor and a memory, where the memory stores computer readable instructions, and the processor is configured to: invoke the computer readable instructions, and perform the foregoing method.

## Claims

1. A dividing method for a working region of a self-moving device, comprising:
detecting whether a working region comprises a shaded region, the shaded region being a region in which a positioning signal received by a self-moving device does not satisfy a quality condition;
determining a boundary condition of the working region;
determining a contour condition of the shaded region; and
dividing the working region into a plurality of sub-working regions based on the boundary condition of the working region and the contour condition of the shaded region, a part of the shaded region in any sub-working region being a sub-shaded region, the sub-shaded region having a length direction and a width direction, and the division enabling a length in the width direction to be less than a predetermined threshold.

2. The dividing method for a working region of a self-moving device according to claim 1, wherein the predetermined threshold is 10 meters or 5 meters or 2 meters.

3. The dividing method for a working region of a self-moving device according to claim 1, further comprising:
controlling the self-moving device to travel in the width direction in the sub-shaded region.

4. The dividing method for a working region of a self-moving device according to claim 3, wherein the controlling the self-moving device to travel in the width direction in the sub-shaded region comprises:
controlling the self-moving device to enter the sub-shaded region from one side in the width direction; and
controlling the self-moving device to keep traveling in the width direction to reach the other side of the sub-shaded region.

5. The dividing method for a working region of a self-moving device according to claim 4, wherein the controlling the self-moving device to travel in the width direction in the sub-shaded region further comprises:
controlling the self-moving device to leave the sub-shaded region from the other side; or
controlling the self-moving device to turn around at the other side to leave from the side, wherein a travel direction after the turnaround is the width direction.

6. The dividing method for a working region of a self-moving device according to claim 1, wherein the dividing the working region into a plurality of sub-working regions based on the boundary condition of the working region and the contour condition of the shaded region comprises:
determining whether an area of the shaded region is greater than a predetermined area threshold; and
dividing the working region into a plurality of sub-working regions in response to determining that the area of the shaded region is greater than the predetermined area threshold.

7. The dividing method for a working region of a self-moving device according to claim 1, wherein the dividing the working region into a plurality of sub-working regions based on the boundary condition of the working region and the contour condition of the shaded region comprises:
dividing the working region into a plurality of sub-working regions based on the boundary condition of the working region and the contour condition of the shaded region, so that the self-moving device enters the shaded region in different directions in the plurality of sub-working regions.

8. The dividing method for a working region of a self-moving device according to claim 7, wherein that the self-moving device enters the shaded region in different directions in the plurality of sub-working regions comprises:
determining whether a predetermined number of movements of the self-moving device in different directions cover the shaded region; and
further dividing, in response to that the predetermined number of movements of the self-moving device in different directions do not cover the shaded region, the plurality of sub-working regions obtained after the division.

9. The dividing method for a working region of a self-moving device according to claim 1, wherein the dividing the working region into a plurality of sub-working regions based on the boundary condition of the working region and the contour condition of the shaded region comprises:
dividing the plurality of sub-working regions so that adjacent working regions of the plurality of sub-working regions have an overlapping portion.

10. The dividing method for a working region of a self-moving device according to claim 1, wherein the dividing the working region into a plurality of sub-working regions based on the boundary condition of the working region and the contour condition of the shaded region further comprises:
detecting a working area corresponding to a working time of a power supply of the self-moving device;
determining whether an area of each of the plurality of sub-working regions is greater than the working area; and
further dividing the sub-working region in response to determining that an area of one of the plurality of sub-working regions is greater than the working area, so that an area of the working region obtained after the division is less than the working area.

11. The dividing method for a working region of a self-moving device according to claim 1, further comprising:
detecting whether an obstacle exists in the working region;
determining whether a size of the obstacle is greater than a predetermined size threshold; and
dividing the working region based on the obstacle in response to that the size of the obstacle is greater than the predetermined size threshold.

12. The dividing method for a working region of a self-moving device according to claim 11, further comprising:
skipping division of the working region in response to that the size of the obstacle is less than the predetermined size threshold; and
controlling the self-moving device to move around the obstacle or turn around at the obstacle to move on.

13. The dividing method for a working region of a self-moving device according to claim 11, wherein the determining whether a size of the obstacle is greater than a predetermined size threshold comprises:
detecting that a state of the obstacle is moving or stationary; and
detecting, in response to that the state of the obstacle is stationary, whether the size of the obstacle is greater than the predetermined size threshold.

14. The dividing method for a working region of a self-moving device according to claim 13, further comprising:
skipping division of the working region in response to that the state of the obstacle is moving; and
controlling the self-moving device to move around the obstacle or turn around at the obstacle to move on.

15. The dividing method for a working region of a self-moving device according to claim 1, further comprising:
detecting whether a passage exists in the working region; and
dividing, in response to that a passage exists in the working region, the working region into a first sub-working region on one side of the passage and a second sub-working region on the other side of the passage.

16. The dividing method for a working region of a self-moving device according to claim 1, further comprising:
detecting a vegetation growth condition in the working region; and
dividing the working region based on the vegetation growth condition.

17. The dividing method for a working region of a self-moving device according to any one of claims 1 to 16, further comprising:
in a process of controlling the self-moving device to move in the working region, obtaining map information of a path covered by the self-moving device; and
updating a dividing strategy of the working region based on the map information.

18. The dividing method for a working region of a self-moving device according to any one of claims 1 to 16, further comprising:
determining whether an unworked region in which the self-moving device has not performed work exists in the working region; and
dividing the working region to use the unworked region as a new sub-working region.

19. A dividing apparatus, configured to divide a working region of a self-moving device, and comprising:
a shaded region detection unit, configured to detect whether a shaded region exists in the working region, the shaded region being a region in which a positioning signal received by the self-moving device does not satisfy a quality condition;
a working region determining unit, configured to determine a boundary condition of the working region;
a shaded contour determining unit, configured to determine a contour condition of the shaded region; and
a dividing unit, configured to divide the working region into a plurality of sub-working regions based on the boundary condition of the working region and the contour condition of the shaded region, a part of the shaded region in any sub-working region being a sub-shaded region, the sub-shaded region having a length direction and a width direction, and the division enabling a length in the width direction to be less than a predetermined threshold.

20. The dividing apparatus according to claim 19, wherein the predetermined threshold is 10 meters or 5 meters or 2 meters.

21. The dividing apparatus according to claim 19, further comprising:
a control unit, configured to control the self-moving device to travel in the width direction in the sub-shaded region.

22. The dividing apparatus according to claim 21, wherein the control unit is configured to:
control the self-moving device to enter the sub-shaded region from one side in the width direction; and
control the self-moving device to keep traveling in the width direction to reach the other side of the sub-shaded region.

23. The dividing apparatus for a working region of a self-moving device according to claim 22, wherein the control unit is further configured to:
control the self-moving device to leave the sub-shaded region from the other side; or
control the self-moving device to turn around at the other side to leave from the side, wherein a travel direction after the turnaround is the width direction.

24. The dividing apparatus according to claim 19, wherein the dividing unit is configured to:
determine whether an area of the shaded region is greater than a predetermined area threshold; and
divide the working region into the plurality of sub-working regions in response to determining that the area of the shaded region is greater than the predetermined area threshold.

25. The dividing apparatus according to claim 19, wherein the dividing unit is configured to:
divide the working region into a plurality of sub-working regions based on the boundary condition of the working region and the contour condition of the shaded region; and
control the self-moving device to enter the shaded region in different directions in the plurality of sub-working regions.

26. The dividing apparatus according to claim 25, wherein the dividing unit is configured to:
determine whether a predetermined number of movements of the self-moving device in different directions cover the shaded region; and
further divide, in response to that the predetermined number of movements of the self-moving device in different directions do not cover the shaded region, the plurality of sub-working regions obtained after the division.

27. The dividing apparatus according to claim 19, wherein the dividing unit is configured to:
divide the plurality of sub-working regions so that adjacent working regions of the plurality of sub-working regions have an overlapping portion.

28. The dividing apparatus according to claim 19, further comprising:
a working area detection unit, configured to detect a working area corresponding to a working time of a power supply of the self-moving device; and
a working area determining unit, configured to determine whether an area of each of the plurality of sub-working regions is greater than the working area, wherein
the dividing unit is configured to further divide the sub-working region in response to determining that an area of one of the plurality of sub-working regions is greater than the working area, so that an area of the working region obtained after the division is less than the working area.

29. The dividing apparatus according to claim 19, further comprising:
an obstacle detection unit, configured to detect whether an obstacle exists in the working region; and
an obstacle determining unit, configured to determine whether a size of the obstacle is greater than a predetermined size threshold, wherein
the dividing unit is configured to divide the working region based on the obstacle in response to that the size of the obstacle is greater than the predetermined size threshold.

30. The dividing apparatus according to claim 29, wherein
the dividing unit is configured to skip division of the working region in response to that the size of the obstacle is less than the predetermined size threshold; and
the control unit is configured to control the self-moving device to move around the obstacle or turn around at the obstacle to move on.

31. The dividing apparatus according to claim 29, wherein the obstacle determining unit is configured to:
detect that a state of the obstacle is moving or stationary; and
detect, in response to that the state of the obstacle is stationary, whether the size of the obstacle is greater than the predetermined size threshold.

32. The dividing apparatus according to claim 31, wherein the dividing unit is configured to:
skip division of the working region in response to that the state of the obstacle is moving; and
control the self-moving device to move around the obstacle or turn around at the obstacle to move on.

33. The dividing apparatus according to claim 19, further comprising:
a passage detection unit, configured to detect whether a passage exists in the working region, wherein
the dividing unit is configured to divide, in response to that a passage exists in the working region, the working region into a first sub-working region on one side of the passage and a second sub-working region on the other side of the passage.

34. The dividing apparatus according to claim 19, further comprising:
a vegetation detection unit, configured to detect a vegetation growth condition in the working region, wherein
the dividing unit is configured to divide the working region based on the vegetation growth condition.

35. The dividing apparatus according to any one of claims 19 to 34, further comprising:
a map information obtaining unit, configured to: in a process of controlling the self-moving device to move in the working region, obtain map information of a path covered by the self-moving device, wherein
a dividing strategy update unit, configured to update a dividing strategy of the working region based on the map information.

36. The dividing apparatus according to any one of claims 19 to 34, further comprising:
a blank region detection unit, configured to detect whether an unworked region in which the self-moving device has not performed work exists in the working region, wherein
the dividing unit is configured to divide the working region to use the unworked region as a new sub-working region.

37. An autonomous working system, comprising:
a self-moving device, moving and working within a working region defined on a map; and
the dividing apparatus according to any one of claims 19 to 36.

38. The autonomous working system according to claim 37, wherein the self-moving device is an autonomous lawn mower.

39. The autonomous working system according to claim 37, wherein the autonomousautonomous working system is an autonomousautonomous lawn mower.

40. A self-moving device, moving and working within a working region defined on a map, and comprising:
the dividing apparatus according to any one of claims 19 to 36.

41. An electronic device, comprising:
a memory, configured to store computer executable instructions; and
a processor, configured to execute the computer executable instructions stored in the memory, to perform the dividing method for a working region of a self-moving device according to any one of claims 1 to 18.

42. A computer readable storage medium, storing computer program instructions, wherein when being executed by a computing apparatus, the computer program instructions are operable to perform the dividing method for a working region of a self-moving device according to any one of claims 1 to 18.
